# NEUE EUROPÄISCHE PATENTSCHRIFT

(11) **EP 1 584 830 B2**
(45) Veröffentlichungstag und Bekanntmachung des Hinweises auf die Entscheidung über den Einspruch: **21.09.2016**
(45) Hinweis auf die Patenterteilung: 29.11.2006
(21) Anmeldenummer: 04008678.7
(22) Anmeldetag: 10.04.2004
(51) Int. Cl.: F16D 25/0638, F16D 25/12

(54) **Kupplungseinrichtung, insbesondere Anfahrkupplungseinrichtung**
Clutch device, in particular starting clutch
Dispositif d'embrayage, en particulier dispositif d'embrayage de démarrage

(43) Veröffentlichungstag der Anmeldung: 12.10.2005
(73) Patentinhaber: BorgWarner, Inc., Auburn Hills, MI 48326-2872 (US)
(72) Erfinder: Hauck, Hans Jürgen, 76137 Karlsruhe (DE); Schäfer, Michael, 68723 Schwetzingen (DE); Heinrich, Johannes, Dr., 61381 Friedrichsdorf (DE); Strauss, Dietmar, 76703 Kraichtal (DE)
(74) Vertreter: Westphal, Mussgnug & Partner Patentanwälte mbB

(56) Entgegenhaltungen:
- DE-A- 10 115 454
- DE-A1- 10 319 415
- DE-A1- 19 826 351
- DE-A1- 19 917 893
- US-A1- 2003 178 275
- US-A1- 2004 060 793

## Beschreibung

Die Erfindung betrifft eine Anfahrkupplungseinrichtung, gemäß dem Oberbegriff des Anspruchs 1.

Aus einer Kupplung und einem in Reihe geschalteten Torsionsschwingungsdämpfer bestehende Kupplungseinrichtungen sind gemäß dem Stand der Technik in einer Vielzahl von Abwandlungen bekannt.

So zeigt beispielsweise die DE 199 17 893 A1 ein Anfahrelement bestehend aus einem Torsionsschwingungsdämpfer an sich bekannter Art und einer aus zwei Reibscheiben bestehenden Kupplung. Die Reibscheiben der Kupplung umgreifen dabei den Außenumfang des Torsionsschwingungsdämpfers. Der Torsionsschwingungsdämpfer durchsetzt also die Reibscheiben der Kupplung zentral.

Eine Kupplungseinrichtung ähnlicher Art mit einer Lamellenkupplung und mit einem in Reihe geschalleten Torsionsschwingungsdämpfer entnimmt man der DE 199 21 687 A1. Die Lamellenkupplung weist einen Außenlamellen tragenden Außenlamellenträger sowie einen Innenlamellen tragenden Innenlamellenträger auf. Der in Reihe zu dieser Lamellenkupplung geschaltete Torsionsschwingungsdämpfer umfasst ein aus zwei Halbschalen bestehendes Primärelement und ein mittels einer Federeinrichtung gekoppeltes und gegenüber diesem Primärelement verdrehbares Sekundärelement in Form einer Scheibe. Lamellenkupplung und Torsionsschwingungsdämpfer weisen eine gemeinsame Drehachse auf und sind in Achsrichtung nebeneinander angeordnet, Die Federeinrichtung sowie die Halbschalen des Primärelements als auch das scheibenförmige Sekundärelement des in Reihe geschalteten Torsionsschwingungsdämpfers überragen die Lamellenkupplung radial.

Eine Kupplungseinrichtung mit einem gemeinsamen geschlossenen Kupplungsgehäuse für die Lamellenkupplung und den Torsionsschwingungsdämpfer ist aus der DE 101 15 454 A1 bekannt.

Obwohl sich Kupplungseinrichtungen der vorstehend genannten Art dem Grunde nach bewährt haben, besteht weiterhin der Bedarf, diese kompakter auszuführen.

Der Erfindung liegt somit die Aufgabe zugrunde, eine Kupplungseinrichtung der gattungsgemäßen Art derart auszubilden und weiterzubilden, dass sie sich durch eine noch kompaktere Bauweise auszeichnet.

Diese Aufgabe wird bei einer Kupplungseinrichtung der gattungsgemäßen Art durch die Merkmale des kennzeichnenden Teils des Patentanspruchs 1 gelöst.

Vorteilhafte Ausführungen und Weiterbildungen der Erfindung sind in den Unteransprüchen angegeben.

Erfindungsgemäß ist vorgesehen, dass das Kupplungsgehäuse antriebbar ist und der Außenlamellenträger drehfest mit dem Kupplungsgehäuse verbunden ist.

Der Außenlamellenträger und das Primärelement weisen, wenn dessen Außenradius größer ist als der Außenradius des Sekundärelements ist, einen im Wesentlichen gleichen Außenradius auf. Alternativ oder zusätzlich kann auch der Außenlamellenträger und das Sekundärelement, wenn dieses einen größeren Außenradius als das Primärelement aufweist, einen im Wesentlichen gleichen Außenradius aufweisen.

Eine derartige Kupplungseinrichtung zeichnet sich durch ihre radial kleine Bauweise aus.

Gehl man davon aus, dass die radialen Abmessungen des Torsionsschwingungsdämpfers durch die für den speziellen Fall erforderliche Federkapazität vorgegeben sind, bestimmt sich die axiale Ausdehnung der Kupplungseinrichtung allein aus der Anzahl der notwendigen Lamellen, um die für den speziellen Anwendungsfall erforderliche Kupplungskapazitäl bereitzustellen. Auf diese Weise erhält man die dichteste Packung der gesamten Kupplungseinrichtung.

Für den Fall, dass die Federeinrichtung wenigstens eine in Umfangsrichtung angeordnete Schraubenfeder umfasst, ist erfindungsgemäß vorgesehen, dass das Verhältnis aus Federdurchmesser und dem sich aus dem Abstand des Federmittelpunkts zur Rotationsachse ergebenden Wirkradius zwischen 0.5 und 0.75. vorzugsweise 0.6 ist. Zwar befindet sich die Schraubenfeder (oder die Schraubenfedem) zur Erzielung des geringen Außendurchmessers *I*-radius der Kupplungseinrichtung auf einem entsprechend geringen Wirkradius, jedoch ist aufgrund des großenFederdurchmessers *I*-radius in der Regel eine ausreichende Federkapazität gewährleistet, was im Anwendungsfall zu prüfen ist.

In einer besonders vorteilhaften Ausgestaltung dieser Variante sind eine Mehrzahlvon Schraubenfedern vorgesehen, welche mittels eines oder mehrerer sogenannter Federaufteiler in Reihe geschallet sind. Derartige Federaufteiler sind dem Grunde nach bekannt. Es handelt sich dabei um ringförmige, vorzugsweise metallische Elemente, welche radial nach außen oder radial nach innen ragende Vorsprünge aufweisen zwischen denen die Schraubenfedem in Umfangsrichtung endseitig abgestützt angeordnet sind. Die Verwendung von einem oder mehreren Federaufteilern hat beispielsweise gegenüber der Verwendung von außenumfangsseitig gleitend abgestützten Gleitschalen wie sie exemplarisch in der EP 1 353 086 A1 beschrieben sind den Vorteil, dass die Schraubenfedem radial, axial und in Umfangsrichtung quasi reibungsfrei geführt sind. Durch die Reihenschaltung mehrerer Schraubenfedern wird die Steifigkeit (Federrate) des Torsionsschwingungsdämpfers stark reduziert. Eine geringe Federrate wirkt sich darüber hinaus günstig auf die Drehsehwingungsisolation aus.

Eine Anfahrkupplung unterliegt bei einer Anfahrt, insbesondere am Berg mit hoher Anhängerlast einer hohen Wärmebeanspruchung. Hierfür ist eine gute Kühlung der Reibelemente erforderlich. Eine besonders vorteilhafte Ausführungsvariante der Erfindung sieht daher vor, dass das Kupplungsgehäuse kühlmitteldurchströmt ist. Die Kühlung der Lamellen wird also dadurch erzielt, indem einerseits die gesamte Kupplungseinrichtung mit Kühlmittel gefüllt ist und dieses einem gewissen Austausch unterliegt. Typisch ist hier eine Kühlmittelströmung von etwa 3 bis 10 l/min.

Die Verwendung eines geschlossenen, kühlmitteldurchströmlen Kupplungsgehäuses ermöglicht es ferner, die Kupplungseinrichtung anstelle eines Drehmomentwandlers im Antriebsstrang eines Kraftfahrzeugs einzusetzen. Es ist eine individuelle Anpassung der Kupplungseinrichtung an den jeweiligen Wandlerbauraum möglich. Darüber hinaus ist auch eine individuelle Anpassung der Kupplungseinrichtung an die Kühl-*I* Druckmittelversorgungskanäle des Wandlers möglich. Insbesondere eignet sich eine derartige Kupplungseinrichtung sowohl für eine Zwei-Kanal- als auch für eine Drei-Kanal-Kühl-/Druckmittelversorgung.

In besonders vorteilhafter Ausgestaltung dieser Variante ist vorgesehen, die Lamellen und in der Kupplungseinrichtung liegende Bauteile derart auszugestallen, dass eine hohe Umwälzleistung des in dem Kupplungsgehäuse eingeschlossenen Kühlmittels gewährleistet ist. Bei einer Kühlmittelzufuhr aus dem Kühlmittelkanal von etwa 3 bis 10 l pro Minute ist durch eine geeignete Gestaltung der Reiblamellen und der in der Kupplung liegenden Bauteile eine Umwälzförderleistung in der Größenordnung von etwa 100 l/min erreichbar.

Unter geeigneter Gestaltung der Reiblamellen versteht man ganz allgemein entsprechende Formgebungen oder Belagnutungen welche einen Transport von Kühlmittel von Innen nach Außen ermöglichen bzw. unterstützen.

Beispielsweise kann eine Belagnulung vorgesehen sein, bei der die Nuten vom Innenrand der jeweiligen Reibscheibelamelle zum Außenrand verlaufen.

Fördernd wirkt die Nutung der Reiblamellen dann, wenn die Reiblamellen mit dem Gehäuse verbunden sind, weil dieses sich mit Motordrehzahl dreht. Die Nutung kann radial angeordnet sein oder in Umfangsrichtung mit einem Winkel von ca. 10° bis 20° entgegen der Rotationsrichtung geneigt sein, um die Förderwirkung zu optimieren.

Um die Umwälzbewegung zu unterstützen bzw. nicht zu behindern, weisen die Bauteile Lamellenträger. Dämpfergehäuse etc. entsprechende Bohrungen oder Schlitze auf.

Eine weitere besonders vorteilhafte Ausführungsvariante der Erfindung sieht vor, dass das Kupplungsgehäuse aus zwei Halbschalen gebildel ist. Diese Variante ist sowohl aus fertigungstechnischer Sicht, die Herstellung zweier Halbschalen ist sehr einfach und damit kostengünstig, als auch aus montagetechnischer Sicht, das Zusammenfügen zweier Halbschalen lässt sich sehr einfach bewerkstelligen, günstig. Sowohl die Herstellungskosten als auch die Montagekosten sind gering.

Es ist möglich, zur drehfesten Verbindung Außenlamellenträger und Kupplungsgehäuse miteinander zu verschrauben oder zu vernieten, oder unmittelbar miteinander zu verschweißen. Alle drei Varianten zeichnen sich durch eine geringe Zahl notwendiger Teile als auch durch eine einfache Montage aus.

Die Erfindung sieht vor, dass das Sekundärelement einen Dämpferflansch beispielsweise in Scheibenform umfasst und dass das Primärelement eine Dämpferschale umfasst, welche den Dämpferflansch gehäuseartig umgreift. Die Dämpferschale selbst ist aus zwei Dämpferhalbschalen ausgebildet. welche beispielsweise zu deren drehfesten Verbindung eine ineinandergreifende Klauen- oder Kammverzahnung aufweisen. Die Dämpferschale ist mit dem Innenlamellenträger drehfest verbunden. Die drehfeste Verbindung kann wiederum über eine Verschraubung, eine Vernietung oder durch Verschweißen der beiden Komponenten hergestellt werden. Wiederum zeichnen sich alle drei Varianten durch eine geringe Anzahl notwendiger Einzeibeslandteile sowie eine einfache Montage aus.

Idealerweise sind Primärelement und Sekundärelement mittels einer Lagerung drehbar zueinander gelagert. Die Lagerung ist dabei bei Bedarf mittels einer Federvorrichtung mit einem bestimmten Reibmoment beaufschlagbar. Auf diese Weise lassen sich die Dämpfungseigenschaften des Torsionsschwingungsdämpfers gezielt einstellen.

Erfindungsgemäß ist abtriebsseitig eine Getriebeeingangsnabe vorgesehen. Damit lässt sich auf einfache Weise eine Verbindung mit einer Getriebeeingangswelle herstellen.

Obwohl es grundsätzlich möglich ist, ein Drehmoment über den Torsionsschwingungsdämpfer einzuleiten und von der Lamellenkupplung abzugreifen, ergeben sich Vorteile in der Torsionsschwingungsdämpfung insbesondere für Fahrzeuge mit Allrad- und Hinterachsantrieb aufgrund des geringen Massenträgheitsmoments am Torsionsschwingungsdämpferabtrieb, wenn der Torsionsschwingungsdämpfer abtriebsseitig angeordnet wird. Durch eine derartige nachgeschallete Dämpferanordnung werden im Bereich der Eigenfrequenz des Hinterachsgetriebes (Differential) die Drehschwingungsamplituden stärker reduziert, gegenüber einer Anordnung bei der sich der Torsionsschwingungsdämpfer im Kraftfluss vor der Kupplung befindet. Die Erfindung sieht vor, das Sekundärelement des Dämpfers vorzugsweise drehfest mil der Gelriebeeingangsnabe zu verbinden.

Wenn die Getriebeeingangsnabe den Torsionsschwingungsdämpfer unddie Lamellenkupplung axial durchsetzt, kann diese beispielsweise antriebsseitig in einem Pilotzapfen des Kupplungsgehäuses und abtriebsseitig an einer Führungshülse radial gelagert sein. Eine axiale Verschiebung wird dadurch verhindert, dass sowohl antriebsseitig als auch abtriebsseitig Axiallager vorgesehen sind, welche sich vorzugsweise an dem vorstehend beschriebenen Kupplungsgehäuse axial abstützt.

Anstelle einer den Torsionsschwingungsdämpter und die Lamellenkupplung axial durchsetzenden Getriebeeingangsnabe ist erfindungsgemäß eine verkürzte Getriebeeingangsnabe vorgesehen sein, welche allein den Torsionsschwingungsdämpfer, nicht aber die Lamellenkupplung axial durchsetzt. In diesem Fall ist erfindungsgemäß eine zusätzliche Kupplungsnabe vorgesehen, welche die Lamellenkupplung axial durchsetzt. Es genügt dann, ein einziges Radiallager für die Getriebeeingangsnabe vorzusehen, welches sich an der vorstehend erwähnten getriebeseitigen Führungshülse abstützt.

Zur Verhinderung einer axialen Verschiebung sind wiederum zwei Axiallager vorgesehen, ein antriebsseitiges, welches sich beispielsweise gegen die Kupplungsnabe abslützt und ein abtriebsseitiges, welches sich beispielsweise gegen das Kupplungsgehäuse abslützt.

Eine kürzere Getriebeeingangsnabe lässt sich hinsichtlich des Zerspanungsprozesses wesentlich wemgeraufwendig fertigen und ist damit kostengünstig herstellbar.

Auch die zusätzlich vorgesehene Kupplungsnabe lässt sich aus denselben Gründen wesentlich weniger aufwendig fertigen und ist damit ebenfalls kostengünstig herstellbar. Diese Kupplungsnabe wird beispielsweise in den Pilotzapfen des Kupplungsgehäuses eingepresst und radial verstemmt.

Diese Kupplungsnabe ist derart ausgebildet, dass sie die Getriebeeingangswelle aufnimmt und als Drehdurchführung und Gleitlager für diese dient. Damit lassen sich sonst erforderliche Gleitlager, gleitende Dichtringe und/oder einfache Dichtringe einsparen.

Vorteilhafterweise ist eine flexible Scheibe vorgesehen. über welche die Kupplungseinrichtung mit einem Motor, insbesondere Verbrennungsmotor, verbindbar ist. Diese flexible Scheibe dient dazu, Taumelschwingungen. Axialschwingungen und gegebenenfalls Radialschwingungen abzudämpfen.

Eine besonders vorteilhafte Ausführungsvariante der Erfindung siehl eine elektrische Maschine, z. B. einen Kurbelwellenstartergenerator vor, welcher die Lamellenkupplung und den Torsionsschwingungsdämpfer umfangsseitig umgreift. Wird die Kupplungseinrichtung als Anfahrkupplungseinrichtung anstelle eines Drehmomentwandlers verwendet, so lässt sich im konventionellen Wandlerbauraum aufgrund der radial kleinen Bauweise der Kupplungseinrichtung sowohl die Anfahrkupplung bestehend aus Lamellenkupplung und Torsionsschwingungsdämpfer als auch der Kurbelwellenstartergenerator unterbringen.

Vorzugsweise bildet der Rotor der elektrischen Maschine bzw. des Kurbelwellenstartergenerators den Antrieb der Kupplungseinrichtung. Es genügt eine drehleste Verbindung mit dem Kupplungseingang oder gegebenenfalls mit dem Kupplungsgehäuse. Diese drehfeste Verbindung kann eine Verschraubung, eine Vernietung, eine Verschweißung oder dergleichen sein.

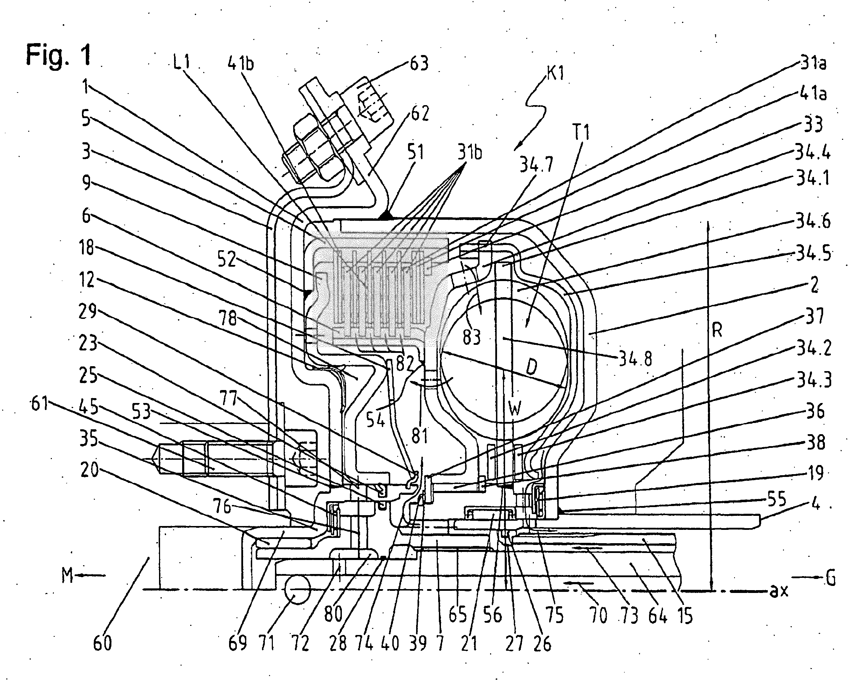

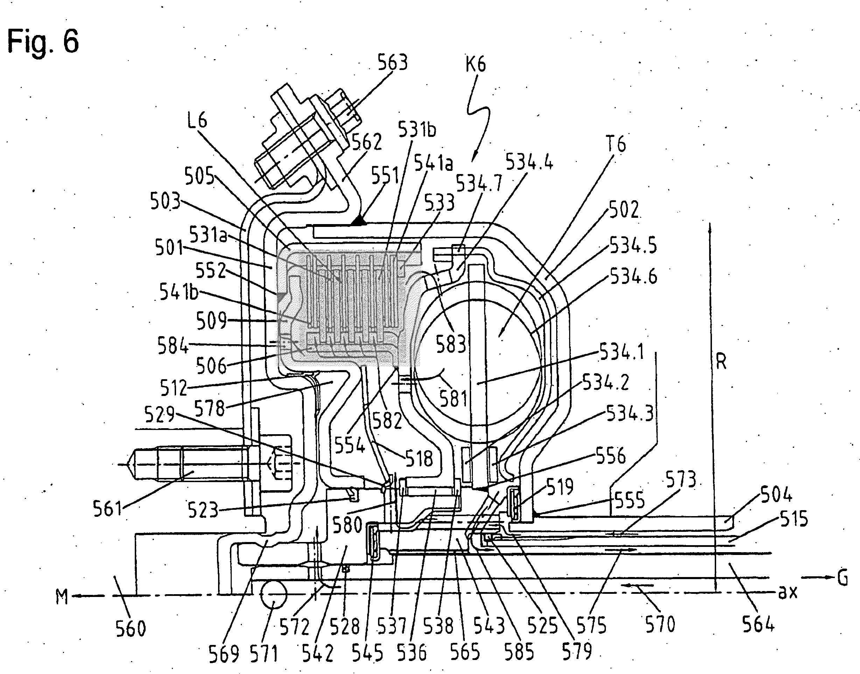

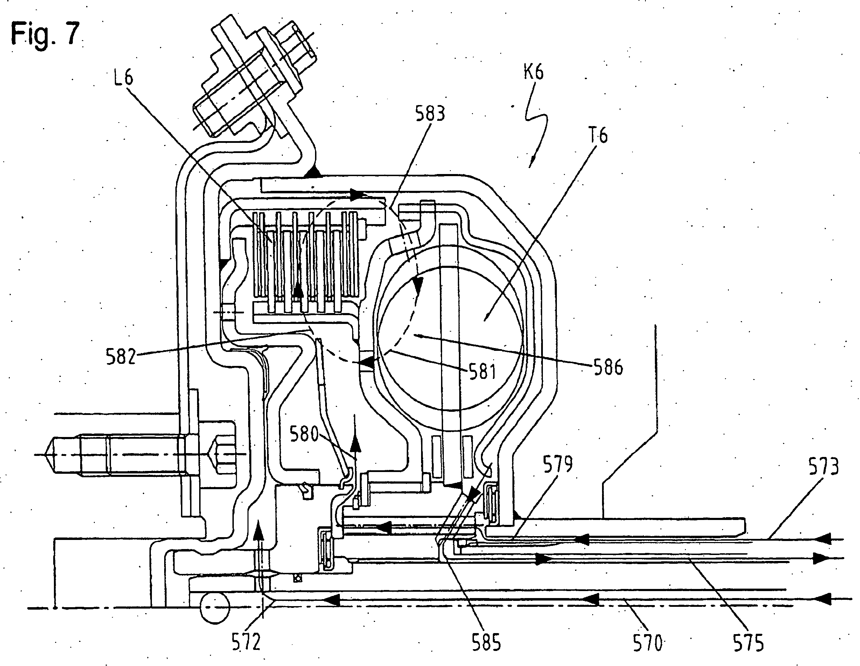

Die Erfindung wird nunmehr anhand der Zeichnungen näher beschrieben. Es zeigen:
Figur 1:
   Ein erstes Ausführungsbeispiel einer Kupplungseinrichtung. Die Lamellenkupplung befindet sich auf der Antriebsseite der Kupplungseinrichtung. Der Torsionsschwingungsdämpfer befindet sich auf der Abtriebsseite der Kupplungseinrichtung. Die Lamellenkupplung ist eingangsseitig mit einem antreibenden Verbrennungsmotor verbunden. Der Betätigungskolben der Lamellenkupplung wird angetrieben. Der Torsionsschwingungsdämpfer ist ausgangsseitig mit einer Getriebeeingangswelle verbunden. Es besteht eine 3-Kanal-Kühl/Druckmittelversorgung über die Getriebeeingangswelle.
Figur 2:
   Ein zweites Ausführungsbeispiel einer Kupplungseinrichtung in kompakter Bauweise. Der Torsionsschwingungsdämpfer ist, räumlich gesehen, antriebsseitig, die Lamellenkupplung abtriebsseitig angeordnet. Die Lamellenkupplung ist eingangsseitig mit einem antreibenden Verbrennungsmotor verbunden. Der Betätigungskolben der Lamellenkupplung ist angetrieben. Der Torsionsschwingungsdämpfer ist ausgangsseitig mit einer Getriebeeingangswelle verbunden. Es besteht eine 2-Kanal-Kühl/Druckmittelversorgung über die Getriebeeingangswelle.
Figur 3:
   Ein drittes Ausführungsbeispiel einer Kupplungseinrichtung in kompakter Bauweise. Der Torsionsschwingungsdämpfer ist, räumlichgesehen, auf der Antriebsseite, die Lamellenkupplung auf der Abtriebsseite angeordnet. Die Lamellenkupplung ist eingangsseitig mit einem antreibenden Verbrennungsmotorverbunden. Der Betätigungskolben der Lamellenkupplung ist nicht angetrieben. Der Torsionsschwingungsdämpfer ist ausgangsseitig mit einer Getriebeeingangswelle verbunden. Es ist eine die Lamellenkupplung und den Torsionsschwingungsdämpfer axial durchsetzende Getriebeeingangsnabe vorgesehen. Es ist ein Ausgleichsraum vorhanden.
Figur 4:
   Ein viertes Ausführungsbeispiel einer Kupplungseinrichtung in kompakter Bauweise. Der Torsionsschwingungsdämpfer ist, räumlich gesehen, auf derAntriebsseite angeordnet. Die Lamellenkupplung ist auf der Abtriebsseite angeordnet. Die Lamellenkupplung ist eingangsseitig mit einem antreibenden Verbrennungsmotor verbunden. Der Betätigungskolben der Lamellenkupplung ist nicht angetrieben. Der Torsionsschwingungsdämpfer ist ausgangsseitig mit einer Getriebeeingangswelle verbunden. Es ist eine die Lamellenkupplung und den Torsionsschwingungsdämpfer axial durchsetzende Getriebeeingangsnabe vorgesehen. Es ist kein Ausgleichsraum vorgesehen.
Figur 5:
   Ein fünftes Ausführungsbeispiel einer Kupplungseinrichtung in kompakter Bauweise. Die Lamellenkupplung befindetsich auf der Antriebsseite der Kupplungseinrichtung. Der Torsionsschwingungsdämpfer ist auf der Abtriebsseite angeordnet. Die Lamellenkupplung ist eingangsseitig mit einem antreibenden Verbrennungsmotor verbunden. Der Betätigungskolben der Lamellenkupplung ist angetrieben. Der Torsionsschwingungsdämpfer ist ausgangsseitig mit einer Getriebeeingangswelle verbunden. Es ist eine den Torsionsschwingungsdämpfer axial durchsetzende Getriebeeingangsnabe sowie eine die Lamellenkupplung axial durchsetzende Kupplungsnabe vorgesehen.
Figur 6:
   Ein sechstes Ausführungsbeispiel einer kompakten Kupplungseinrichtung in kompakter Bauweise. Die Lamellenkupplung befindet sich auf der Antriebsseite der Kupplungseinrichtung. Der Torsionsschwingungsdämpfer ist auf der Abtriebsseite angeordnet. Die Lamellenkupplung ist eingangsseitig mit einem antreibenden Verbrennungsmotor verbunden. Der Betätigungskolben der Lamellenkupplung ist angetrieben. Der Torsionsschwingungsdämpfer ist ausgangsseitig mit einer Getriebeeingangswelle verbunden. Es ist eine den Torsionsschwingungsdämpfer axial durchsetzende Getriebeeingangsnabe sowie eine die Lamellenkupplung axial durchsetzende Kupplungsnabe vorgesehen. Die Dämpferschale ist mit dem Innenlamellenträger auf der Getriebeeingangsnabe gelagert.
Figur 7:
   Die Kühlmittelströmung in der Kupplungseinrichtung gemäß dem Ausführungsbeispiel gemäß der Figur 6.
Figur 8:
   Einen Federaufteiler für einen Torsionsschwingungsdämpfer in einer der Kupplungseinrichtungen gemäß den Figuren 1 bis 6.
Figur 9:
   Eine Reiblamelle für eine Kupplungseinrichtung nach einem der Ausführungsbeispiele gemäß den Figuren 1 bis 6. Die Reiblamelle dient der Erzielung einer hohen Kühlmittelumwätzleistung.

Die in den Figuren 1 bis 4 dargestellten Ausführungsbeispiele sind nicht Gegenstand der vorliegenden Erfindung.

Die Figur 1 zeigt ein erstes Ausführungsbeispiel einer Kupplungseinrichtung K1. Diese Kuppiungseinnchtung K1 besteht aus einer Lamellenkupplung L1 und einem Torsionsschwingungsdämpfer T1. Die Lamellenkupplung L1 und der Torsionsschwingungsdämpfer T1 sind in Reihe geschaltet. Die Lamellenkupplung L1 und der Torsionsschwingungsdämpfer T1 weisen eine gemeinsame Drehachse ax auf. Lamellenkupplung L1 und Torsionsschwingungsdämpfer T1 sind in Achsrichtung ax nebeneinander angeordnet. Ein beispielsweise von einem (hier nicht dargestellten) Verbrennungsmotor M erzeugtes Drehmoment wird über die Lamellenkupplung L1 der Kupplungseinrichtung zugeführt und kann beispielsweise von einem (hier nicht dargestellten) Getriebe G über den Torsironsschwingungsdämpfer T1 abgeführt werden.

Die Lamellenkupplung L1 ist in an sich bekannter Art und Weise ausgebildet. Sie umfasst einen Außenlamellen 31a tragenden Außenlamellenlräger 5 und einen Innenlamellen 31b tragenden Innenlamellenträger 6. Bestandteil der Lamellenkupplung L1 ist weiterhin ein Betätigungskolben 9. welcher dazu vorgesehen ist, die verzahnungsartig ineinandergreifenden und ein Lamellenpaket bildenden Außen- und Innenlamellen 31a, 31b in reibschlüssigen Kontakt zu verbringen, indem er beim Betätigen auf eine Druckplatte 41b drückend einwirkt. Dieser Betätigungskolben 9 wird im nicht betätigten Zustand aufgrund der Federkraft einer als Tellerfeder 18 ausgebildeten Rückstellfeder in einer Ruhestellung gehalten.

Der Torsionsschwingungsdämpfer T1 umfaßt ebenfalls in an sich bekannter Weise ein Primärelement und ein mittels einer Federeinrichtung gekoppeltes und gegenüber diesem verdrehbares Sekundärelement.

Das Primärelement umfasst vorliegend zwei eine Dämpferschale bildende Dämpferhalbschalen 34.4. 34.5. Außenumfangsseitig weisen diese Dämaferhalbschalen 34.4 und 34.5 eine Kamm- oder Klauenverzahnung auf, mit Hilfe derer sie die Dämpferschale bildend drehfest miteinander verbunden sind.

Das Sekundärelement umfasst einen scheibenförmigen Dämpferflansch 34.1. Dieser ist in etwa axial mittig zwischen den beiden Dämpferhalbschalen 34.4 und 34.5 angeordnet und wird von diesen gehäuseartig umgriffen.

Die Federeinrichtung umfasst eine Mehrzahl in Umfangsrichtung hintereinander angeordnete Schraubenfedern 34.6. Diese Schraubenfedern 34.6 sind axial zwischen den beiden Dämpferhalbschaten 34.4 und 34.5 des Primärelements angeordnet und werden von diesen im Wesentlichen formschlüssig umschlossen.

Die Dämpferhalbschalen 34.4 und 34.5 weisen (hier nicht dargestellte) axial gegenüberliegende und nach radial innen gerichtete Mitnehmer auf. Der Dämpferflansch 34.1 weist korrespondierend zu diesen radial nach außen gerichtete Mitnehmer auf, gegen die sich jeweils entsprechende Schraubenfedern 34.6 abstützen. Eine detaillierte Beschreibung der Federkopplung zwischen Primär- und Sekundärelement ist beispielsweise der DE 100 37 646 A1 zu entnehmen.

Abweiche nd von dieser Anordnung sind vorliegend beidseits des Dämpferflansches 34.1 Federaufleiler angeordnet, welche die Schraubenfedern 34.6 in Umfangsrichtung hintereinander in Reihe schalten.

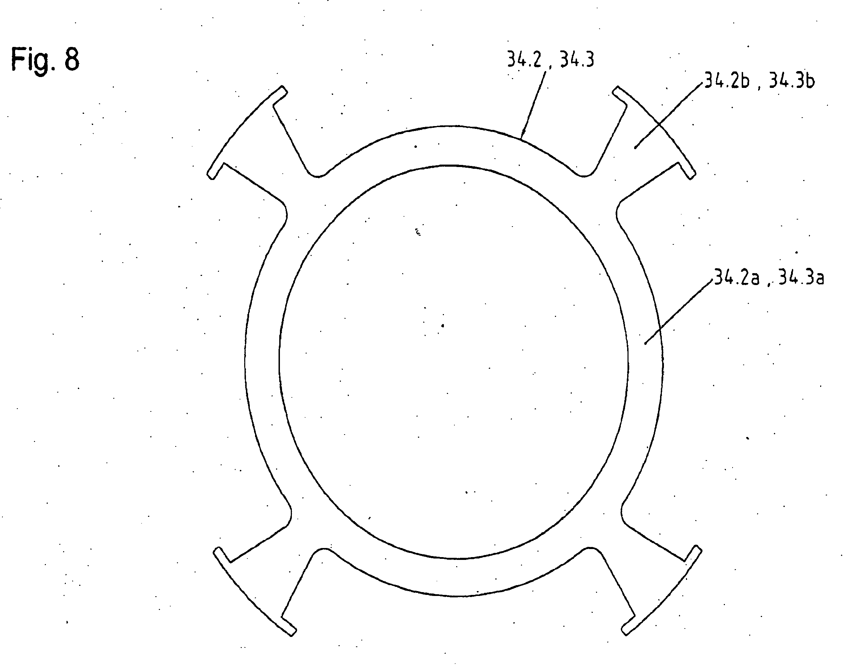

Einen derartigen Federaufteiler 34.2, 34.3 entnimmt man beispielsweise der Figur 8. Er besteht aus einem Ring 34.2a, 34.3a aus Metall oder Kunststoff mit radial nach außen ragenden Vorsprüngen, welche nachfolgend als Federabstützungen 34.2b, 34.3b bezeichnet sind.

Ein derartiger Federaufteiler 34.2, 34.3 teilt den Umfangsbereich zwischen zwei (oder gegebenenfalls mehr) Mitnehmern 34.8 in Umfangsteilabschnitte auf, in denen jeweils eine Schraubenfeder angeordnet ist, wie es beispielsweise aus der EP 0 340 608 B1 zu entnehmen ist.

Der Innenlamellenträger 6 der Lamellenkupplung L1 ist an einer Schweißstelle 54 mit der antriebsseitigen Dämpferhalbschale 34.4 des Torsionsschwingungsdämpfers T1 verschweißt.

Das scheibenförmige Sekundärelement 34.1 ist drehfest mit einer Getriebeeingangsnabe 7 verbunden, welche sowohl den Torsionsschwingungsdämpfer T1 und die Lamellenkupplung L1 zentral durchsetzt. Die drehfeste Verbindung zwischen Sekundärelement 34.1 und Getriebeeingangsnabe 7 ist mittels einer Verschweißung (Schweißstelle 56) realisiert. Denkbar ist hier selbstverständlich auch eine Steckverzahnung oder dergleichen.

Die Getriebeeingansnabe 7 ist zur Aufnahme einer Abtriebswelle, in Beispiel einer Getriebeeingangswelle 64 vorgesehen. Eine drehfeste Verbindung zwischen der Getriebeeingangsnabe 7 und der Getriebeeingangswelle 64 ist im vorliegenden Beispiel über eine Steckverzahnung 65 hergestellt.

Die Lamellenkupplung L1 und der Torsionsschwingungsdämpfer T1 sind in einem gemeinsamen abgeschlossenen Kupplungsgehäuse untergebracht. Dieses Kupplungsgehäuse besteht aus einer ersten Halbschale 1 und einer zweiten Halbschale 2. Beide Halbschalen 1. 2 sind miteinander verschweißt (Schweißstelle 51).

Der Außenlamellenträger 5 der Lamellenkupplung L1 ist antriebsseitig mit der ersten Halbschale 1 des Kupplungsgehäuses verschweißt (Schweißstelle 52). An die erste Halbschale 1 des Kupplungsgehäuses ist ein Zylinder 35 angeschweißt (Schweißstelle 53). Es versteht sich für den Fachmann von selbst, dass ein derartiger Zylinder 35 auch einstückiger Bestandteil der ersten Halbschale 1 sein kann.

Die Getriebeeingangsnabe 7 ist einerseits mittels einer Führungsbuchse 20 (wahlweise kann anstelle dieser Führungsbuchse auch ein Radiallager verwendet werden) an einem Pilotzapfen 69 des Zylinders 35 und andererseits mittels eines Radiallagers 21 (wahlweise kann hier selbstverständlich auch eine Führungsbuchse verwendel werden) an einer drehfest mit der zweiten Halbschale 2 des Kupplungsgehäuses verbundenen getriebeseitigen Führungshülse 4 drehbar gelagert. Die drehfeste Verbindung zwischen Führungshülse 4 und zweiter Halbschale 2 wird hierebenfalls mittels einer Verschweißung (Schweißstelle 55) hergestellt.

Neben der drehbaren Lagerung um die Achse ax mittels der vorstehend beschriebenen Führungsbuchsen oder Radiallager 20, 21 sind auch Axiallager vorgesehen, welche eine axiale Bewegung der Getriebeeingangsnabe 7 verhindern. Insbesondere ist ein motorseitiges Axiallager 45 zwischen einer radialen Wandung des Zylinders 35 und der Getriebeeingangsnabe 7 sowie ein getriebeseitiges Axiallager 19 zwischen einer radialen Wandung der zweiten Halbschale 2 des Kupplungsgehäuses und der Getriebeeingangsnabe 7 vorgesehen. Die antriebsseitige Dämpferhalbschale 34.4 des Primärelements ist mittels einer Führungsbuchse 36 (alternativ kann selbstverständlich auch ein Radiallager verwendet werden) an der Getriebeeingangsnabe 7 drehbar gelagert. Eine axiale Verschiebung wird dabei mittels zweier Anlaufscheiben 37 und 38 verhindert.

Um die Dämpfungseigenschaften auf die jeweiligen Bedürfnisse anzupassen, kann die Lagerung bestehend aus dem Radiallager 36 und den beiden Anlaufscheiben 37 und 38 bei Bedarf durch eine Federvorrichtung, welche im vorliegenden Fall mittels eines Federelements 39 und eines Sicherungsrings 40 realisiert ist mit einem vorbestimmlen Reibmoment beaufschlagt werden.

Der Betätigungskolben 9 ist im vorliegenden Ausführungsbeispiel einerseits an einer koaxial verlaufenden Wandung der ersten Halbschale des Kupplungsgehäuses 1 sowie an einer ebenfalls koaxial zur Drehachse ax verlaufenden Wandung des Zylinders 35 axial verschieblich geführt und mittels entsprechender Dichtungen 12 und 23 gegen das umgebende Gehäuse abgedichtet.

In seiner Ruhestellung wird der Betätigungskolben 9 mittels einer Tellerfeder, welche sich innenumfangsseitig gegen einen axial mit dem Zylinder 35 verbundenen Haltering 29 abstützt, gegen die Innenwandung der ersten Halbschale 1 des Kupplungsgehäuses gedrückt gehalten.

Die erste Halbschale 1 weist im vorliegenden Ausführungsbeispiel einen schräg nach radial außen ausgerichteten Ring 62 auf. An diesen Ring 62 ist eine flexible Scheibe 3 an sich bekannter Art angeschraubt (Schraube 63). Eine derartige flexible Scheibe 3 entnimmt man beispielsweise der europäischen Patentanmeldung 03015283.9. Diese Scheibe 3 dient dazu. Taumelschwingungen, radiale Versätze, axiale Schwingungen und gegebenenfalls Radialschwingungen auszugleichen.

Innenumfangsseitig ist diese flexible Scheibe 3 mit einer Antriebswelle 60. beispielsweise mit einer Kurbelwelle, welche von einem Motor M angetrieben wird, verschraubt. Anstelle einer Verschraubung kann selbstverständlich auch eine Steckverzahnung oder dergleichen gewählt werden.

Ein von dem Motor M eingeleitetes Motormoment wird demzufolge über die flexible Scheibe 3 ins Kupplungsgehäuse 1, eingeleitet. Von dort wird es über den Außenlamellenträger 5. an dem vorzugsweise die Reiblamellen 31a drehfest aber axial verschieblich geführt sind, das Lamellenpaket 31a, 31b auf den Innenlamellenträger 6, welcher demzufolge vorteilhafterweise die Stahllamellen 31b trägt auf die Dämpferhalbschalen 34.4. 34.5. die Schraubenfedern 34.6. Federaufteiler 34.2, 34.3, Dämpferflansch 34.1 und Getriebeeingangsnabe 7 auf die Getriebeeingangswelle 64 und damit ins Getriebe G eingeleitet.

Um den Bauraum der Kupplungseinrichtung K1 möglichst klein zu halten, ist erfindungsgemäß vorgesehen, dass der Außenlamellenträger 5 und die äußere der beiden Dämpferhalbschalen 34.4, 34.5 einen im Wesentlichen gleichen Außenradius R aufweisen. Da die radialen Abmessungen des Torsionsschwingungsdämpfers T1 in der Regel durch die für den jeweiligen Anwendungsfall erforderliche Federkapazilät vorgegeben sind, bestimmen sich die axialen Abmessungen der Kupplungseinrichtung K1 allein aus der Anzahl der notwendigen Lamellen 31a, 31b. um die entsprechende Kupplungskapazität bereitzustellen.

Im vorliegenden Fall ist das Verhältnis aus Federdurchmesser D und dem sich aus dem Abstand des Federmittelpunkts zur Rotationsachse ax ergebenden Wirkradius W zu 0.55 gewählt. Zwar befinden sich die Schraubenfedern 34.6 zur Erzielung des geringen Außenradius R der Kupplungseinrichtung K1 auf einem entsprechenden geringen Wirkradius W.jedoch ist aufgrund des großen Federdurchmessers D eine ausreichende Federkapazität gewährleistet.

Da eine Anfahrkupplung der dargestellten Art bei einer Anfahrt, insbesondere am Berg mit hoher Anhängerlast, einer hohen Wärmebeanspruchung ausgesetzt ist, ist es erforderlich, für eine gute Kühlung jeglicher Reibelemente, insbesondere der Außen- und Innenlamellen 31a, 31b zu sorgen. Zu diesem Zweck ist das gesamte Kupplungsgehäuse 1, 2 öldurchströmt. Dieses Kühlöl wird über entsprechende Kanäle zu- bzw. abgeführt und unterliegt demzufolge einem gewissen Austausch. Zu- und abführende Kühlölkanäle befinden sich radial innerhalb bzw. außerhalb der Statorwelle 15. Der kühlölzuführende Kanal ist in der Zeichnungsfigur 1 mit dem Bezugszeichen 73 gekennzeichnet, der kühlölabführende Kanal ist durch einen mit dem Bezugszeichen 75 gekennzeichnete Pfeil markiert.

Ausgehend von der Kühlölzufuhr 73 strömt das Kühlöl mittels eines O-Rings 26 und eines Rings 27 gegen den kühlölabführenden Kanal 75 gedichtet in den Kühlölkanal 74 in das Kupplungsgehäuse ein. Aufgrund der bei Rotation auftretenden Fliehkraft wird das noch kältere Kühlöl nach außen geschleudert und tritt durch entsprechende Öffnungen im Innenlamellenträger 6 zwischen die Reib- und Stahllamellen 31a, 31b ein (Bezugszeichen 82). Am Außenumfang des Außenlamellenträgers tritt das erwärmte Kühlöl durch entsprechende Öffnungen aus und gelangt von dort durch entsprechende Öffnungen im Dämpfergehäuse 34.4 in den Torsionsschwingungsdämpfer T1 (Bezugszeichen 83). Je nach Anordnung der einzelnen Elemente innerhalb der Kupplungsanordnung K1 ist auch ein Kühlölfluss von der Lamellenkupplung L1 über den Kanal B1 zum Torsionsschwingungsdämpfer T1 oder umgekehrt möglich. Das erwärmte Kühlöl tritt über die mit dem Bezugszeichen 75 gekennzeichnete Öffnung aus dem Torsionsschwingungsdämpfer T1 aus.

Zum hydraulischen Betätigen des Betätigungskolbens 9 ist darüber hinaus eine Druckmiltelzufuhr vorgesehen, welche im vorliegenden Ausführungsbeispiel die Getriebeeingangswelle 64 zentral durchsetzt und mit dem Bezugszeichen 70 gekennzeichnet ist. Ein dort eintretendes Druckmittel wird entlang dem Pfad 72. mittels einer Kugel 71 und diversen Dichtungsringen 28, 25 gegen die Außenwelt abgedichtet in den Druckraum 78 geleitet. Ein über diesen Druckmittelkanal 70, 72, 76 zugeführtes Druckmittel verschiebt den Betätigungskolben 9 entgegen der Federkraft der Tellerfeder 18 gegen die Druckplatte 41b, welche wiederum das gesamte Federpaket 31a, 31b gegen die mittels eines Sicherungsrings 33 gehaltene Endplatte 41a drückt. Der Druckraum 78 ist mittels der Dichtungen 12 und 23 gegen den Kühlmittelraum abgedichtet.

Die Statorwelle 15 ist üblicher Bestandteil von Automatgetrieben mit Hydrowandler. Sie ist drehfest mit dem Getriebegehäuse verbunden und stützt das Drehmoment des Stators (=Bauteil im Hydrowandler) gegen das Gehäuse ab. Hier ist sie vorhanden, weil es sich um ein derartiges Automatgetriebe handelt, das praktisch ohne Änderungen (von Hydraulik evtl. abgesehen) mit nasser Anfahrkupplung statt Wandler ausgestattet wird. Die Statorwelle dient hier nur noch dazu, die Ölströme zu trennen eine Funktion, die sie als Nebenfunktion im Wandlerautomaten auch inne hat.

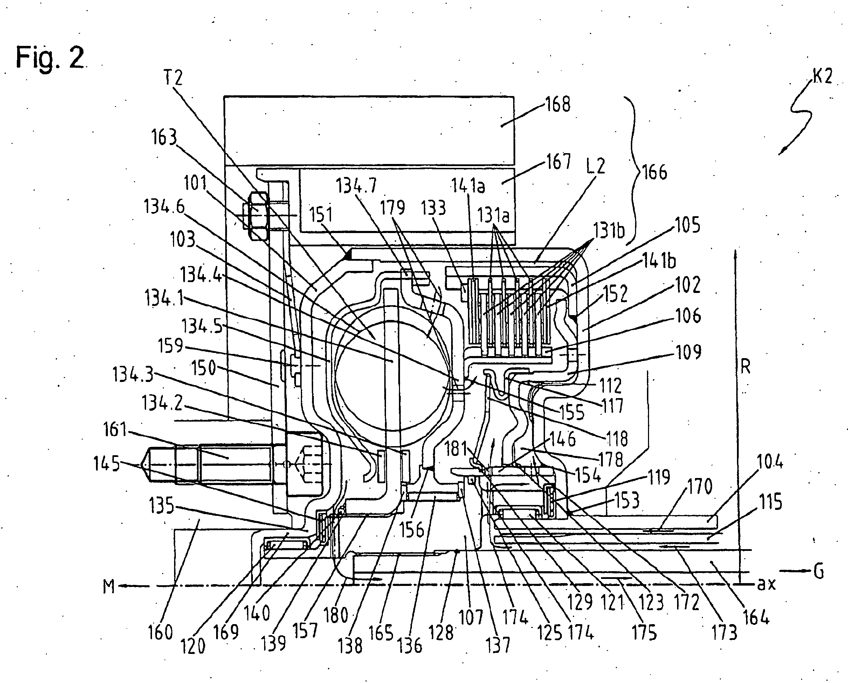

Die Figur 2 zeigt ein zweites Ausführungsbeispiel einer Kupplungseinrichtung K2. Diese Kupplungseinrichtung K2 besteht aus einer Lamellenkupplung L2 und einem Torsionsschwingungsdämpfer T2. Auch die Lamellenkupplung L2 und der Torsionsschwingungsdämpfer T2 sind in Reihe geschaltet. Lamellenkupplung L2 und der Torsionsschwingungsdämpfer T2 weisen eine gemeinsame Drehachse ax auf. Lamellenkupplung L2 und Torsionsschwingungsdämpfer T2 sind in Achsrichtung ax nebeneinander angeordnet. Obwohl hier die Lamellenkupplung L2 auf der Getriebeseite G und der Torsionsschwingungsdämpfer T2 auf der Motorseite M angeordnet ist, wird ein von einem (hier nicht dargestellten) Verbrennungsmotor M erzeugtes Drehmoment über die Lamellenkupplung L2 der Kupplungseinrichtung zugeführt und von einem (hier nicht dargestellten) Getriebe G über den Torsionsschwingungsdämpfer T2 abgeführt.

Die Lamellenkupplung L1 ist wie vorstehend im Ausführungsbeispiel der Figur 1 beschrieben ausgebildet. Sie umfasst einen Außenlamellen 131a tragenden Außenlamellenträger 105 und einen Innenlamellen 131b tragenden Innenlamellenträger 106. Bestandteil der Lamellenkupplung L2 ist auch hier ein Betätigungskolben 109. um die verzahnungsartig ineinandergreifenden und ein Lamellenpaket bildenden Außen- und Innenlamellen 131a, 131b in reibschlüssigen Kontakt zu verbringen. Dieser Betätigungskolben 109 wird im nicht betätigten Zustand aufgrund der Federkraft einer als Tellerfeder 118 ausgebildeten Rückstellfeder in einer die Lamellen 131a, 131b nicht in Eingriff verbringenden Ruhestellung gehalten.

Der Torsionsschwingungsdämpfer T1 umfasst auch hier in vorstehend beschriebener Weise ein Primärelement und ein mittels einer Federeinrichtung gekoppeltes und gegenüber diesem verdrehbares Sekundärelement.

Das Primärelement umfasst vorliegend zwei eine Dämpferschale bildende Dämpferhalbschalen 134.4, 134.5. Außenumfangsseitig weisen diese Dämpferhalbschalen 134.4 und 134.5 eine Kamm- oder Klauenverzahnung 134.7 auf, mit Hilfe derer sie die Dämplerschale bildend drehfest miteinander verbunden sind.

Das Sekundärelement umfasst einen scheibenförmigen Dämpferflansch 134.1. Dieser ist in etwa axial mittig zwischen den beiden Dämpferhalbschalen 134.4 und 134.5 angeordnet und wird von diesen gehäuseartig umgriffen.

Die Federeinrichtung umfasst eine Mehrzahl in Umfangsrichtung hintereinander angeordnete Schraubenfedern 134.6. Diese Schraubenfedern 134.6 sind axial zwischen den beiden Dämpferhalbschalen 134.4 und 134.5 des Primärelements angeordnet und werden von diesen im Wesentlichen formschlüssig umschlossen.

Die Dämpferhalbschalen 134.4 und 134.5 weisen (hier nicht dargestellte) axial gegenüberliegende und nach radial innen gerichtete Mitnehmer auf. Der Dämpferflansch 134.1 weist korrespondierend zu diesen radial nach außen gerichtete Mitnehmer auf, gegen die sich jeweils entsprechende Schraubenfedern 34.6 abstützen.

Beidseits des Dämpferflansches 134.1 sind Federaufteiler 134.2, 134.3 angeordnet, welche die Schraubenfedern 134.6 in vorstehend beschriebener Art in Umfangsrichtung hintereinander schalten.

Der Innenlamellenträger 106 der Lamellenkupplung L2 ist an einer Schweißstelle 155 mit der abtriebsseitigen Dämpferhalbschale 134.4 des Torsionsschwingungsdämpfers T2 verschweißt.

Das scheibenförmige Sekundärelement 134.1 ist drehfest mit einer Getriebeeingangsnabe 107 verbunden, welche sowohl den Torsionsschwingungsdämpfer T2 und die Lamellenkupplung L2 zentral durchsetzt. Die drehfeste Verbindung zwischen Sekundärelement 134.1 und Getriebeeingangsnabe 107 ist mittels einer Steckverzahnung 157 realisiert.

Die Getriebeeingangsnabe 107 ist zur Aufnahme einer Getriebeeingangswelle 164 vorgesehen. Eine drehfeste Verbindung zwischen der Getriebeeingangsnabe 107 und der Getriebeeingangswelle 164 ist im vorliegenden Beispiel über eine Steckverzahnung 165 hergestellt.

Die Lamellenkupplung L2 und der Torsionsschwingungsdämpfer T2 sind wie beim ersten Ausführungsbeispiel in einem gemeinsamen abgeschlossenen Kupplungsgehäuse untergebracht. Dieses Kupplungsgehäuse besteht aus einer ersten Halbschale 101 und einer zweiten Halbschale 102. Beide Halbschalen 101, 102 sind miteinander verschweißt (Schweißstelle 151).

Der Außenlamellenträger 105 der Lamellenkupplung L2 ist abtriebsseitig mit derzweiten Halbschale 102 des Kupplungsgehäuses verschweißt (Schweißstelle 152). An die erste Halbschale 101 ist einstückig ein Zylinder 135 angeformt.

Die Getriebeeingangsnabe 107 ist einerseits mittels eines Radiallagers 120 an einem Pilotzapfen 169 des Zylinders 135 und andererseits mittels eines Radiallagers 121 an einer drehfest mit der zweiten Halbschale 102 des Kupplungsgehäuses verbundenen getriebeseitigen Führungshülse 104 drehbargelagert. Die drehfeste Verbindung zwischen Führungshülse 104 und zweiter Halbschale 102 wird hier ebenfalls mittels einer Verschweißung (Schweißstelle 153) hergestellt.

Neben der drehbaren Lagerung um die Achse ax mittels der vorstehend beschriebenen Radiallager 120, 121 sind auch Axiallager vorgesehen, welche eine axiale Bewegung der Getriebeeingangsnabe 107 verhindem. Insbesondere ist ein motorseitiges Axiallager 145 zwischen einer radialen Wandung des Zylinders 135 und der Getriebeeingangsnabe 107 sowie ein getriebeseitiges Axiallager 119 zwischen einer radialen Wandung der zweiten Halbschale 102 des Kupplungsgehäuses und der Getriebeeingangsnabe 107 vorgesehen. Die zweiteilig ausgebildete (Schweißstelle 156) abtriebsseitige Dämpferhalbschale 134.4 des Primärelements ist mittels einer Führungsbuchse 136 an der Getriebeeingangsnabe 107 drehbar gelagert. Eine axiale Verschiebung wird dabei mittels zweier Anlaufscheiben 137 und 138 verhindert.

Um die Dämpfungseigenschaften auf die jeweiligen Bedürfnisse anzupassen, kann die Lagerung bestehend aus dem Radiallager 136 und den beiden Anlaufscheiben 137 und 138 bei Bedarf durch eine Federvorrichtung, welche im vorliegenden Fall mittels eines Federelements 139undeines Sicherungsrings 140, welche antriebsseitig gegen den Dämpferflansch 134.1 und die Anlaufscheibe 138 drücken, realisiert ist, mit einem vorbestimmten Reibmoment beaufschlagt werden.

Der Betätigungskolben 109 ist im vorliegenden Ausführungsbeispiel einerseits an einer koaxial verlaufenden Wandung derzweiten Halbschale 102 des Kupplungsgehäuses sowie an einer ebenfalls koaxial zur Drehachse ax verlaufenden Wandung eines mit derzweiten Halbschale 102 verschweißten (Schweißstelle 154) Zylinders 146 axial verschieblich geführt und mittels entsprechender Dichtungen 112 und 123 gegen das umgebende Gehäuse abgedichtet.

In seiner Ruhestellung wird der Betätigungskolben 109 mittels einer Tellerfeder 118, welche sich innenumfangsseilig gegen einen axial mit dem Zylinder 146 verbundenen Haltering 129 und außenumfangsseitig gegen eine äußere an einer radial verlaufenden Wandung des Betätigungskolbens 109 anliegende Führungshülse 117 abstützt, gegen die Innenwandung der zweiten Halbschale 102 des Kupplungsgehäuses gedrückt gehalten.

Mit der ersten Halbschale 101 ist im vorliegenden Ausführungsbeispiel innenumfangsseitig eine flexible Scheibe 103 vernietet (Niete 159).

Außenumfangsseitig ist diese flexible Scheibe 103 mit dem Außenumfang einer Schwungscheibe 150 verschraubt (Schraube 163). Diese Schwungscheibe 150 ist innenumfangsseitig mit einer Antriebswelle 160, beispielsweise mit einer Kurbelwelle, welche von einem Motor M angetrieben wird, verschraubt (Schraube 161). Anstelle einer Verschraubung kann selbstverständlich auch eine Steckverzahnung oder dergleichen gewählt werden.

Ein von dem Motor M erzeugtes Motormoment wird demzufolge über die Schwungscheibe 150, die flexible Scheibe 103 ins Kupplungsgehäuse 101, 102 eingeleitet. Von dort wird es über den Außenlamellenträger 105, an dem die Reiblamellen 131a drehfest axial verschieblich geführt sind, die Stahilamellen 131b den Innenlamellenträger 106. die Dämpferhalbschalen 134.4, 134.5, die Schraubenfedern 34.6 und Federaufteiler 134.2, 134.3, den Dämpferflansch 134.1 und die Getriebeeingangsnabe 107 auf die Getriebeeingangswelle 164 und damit ins Getriebe G eingeleitet.

Um den Bauraum der Kupplungseinrichtung K2 möglichst klein zu halten, ist erfindungsgemäß vorgesehen, dass der Außenlamellenträger 105 und die äußere der beiden Dämpferhalbschalen 134.4, 134.5 einen im Wesentlichen gleichen Außenradius R aufweisen.

Auch im vorliegenden Fall ist das Verhältnis aus Federdurchmesser D und Wirkradius W zu 0.55 gewählt.

Zur Kühlung der Reibelemente 131a, 131b, 141a, 141b, T2 ist das gesamte Kupplungsgehäuse 101, 102 wie im vorigen Ausführungsbeispiel öldurchströmt. Dieses Kühlöl wird wieder über entsprechende Kanäle zu- bzw. abgeführt. Abweichend von dem vorstehend beschriebenen Ausführungsbeispiel entsprechend der Figur 1 bei dem ein Drei-Kanal-System mit einem Kühlmittelzufuhrkanal 73, einem Kühlmittelabfuhrkanal 75 und einem Druckmittelkanal 70 vorliegt, basiert die Kupplungseinrichlung K2 auf einem Zwei-Kanal-System. Ein abführender Kühlölkanal befindet sich im Zentrum der Getriebeeingangswelle 164. Dieser kühlölabführende Kanal ist in der Zeichnungsfigur 2 mit dem Bezugszeichen 175 gekennzeichnet. Der zuführende Kanal besteht aus zwei Teilkanälen 173 und 170. Der Teilkanal 173 befindet sich koaxial zur Drehachse ax zwischen dem Außenumfang der Getriebeeingangswelle 164 und dem Innenumfang einer starren, nichtdrehenden Statorwelle 115. Der Teilkanal 170 befindet sich koaxial zur Drehachse ax zwischen dem Außenumfang der Statorwelle 115 und dem Innenumfang der getriebeseitigen Führungshülse 104.

Ausgehend von der Druckölzufuhr 173, 170 strömt das Drucköl mittels der Dichtringe 128, 125 gegen den kühlölabführenden Kanal 175 und den Dämpfer T2 abgedichtet durch den getriebeseitigen Druckölkanal 174 sowie durch eine (oder mehrere) kleine Drosselöffnung 181 in das Kupplungsgehäuse im Bereich der Lamellenkupplung L2 ein. Bei dem 2-Kanal-System wird das Kühlöl vom Drucköl abgezweigt, indem es über die Drosselöffnung 181 in einer druckabhängigen Menge in den Kupplungsraum entweicht.

Auf Grund der bei Rotation auftretenden Fliehkraft wird das noch kältere Kühlöl radial nach außen geschleudert und tritt durch entsprechende Öffnungen im Innenlamellenträger 106 zwischen die Reib- und Stahllamellen 131a, 131b ein. Am Außenumfang des Außenlamellenlrägers 105 tritt das Kühlöl durch entsprechende Öffnungen aus und gelangt von dort durch entsprechende Öffnungen 179 im Dämpfergehäuse 134.4 in den Torsionsschwingungsdämpfer T1. Je nach Anordnung der einzelnen Elemente innerhalb der Kupplungsanordnung K2 ist auch ein Kühlöffluss von der Lamellenkupplung L2 zum Torsionsschwingungsdämpfer T2 oder umgekehrt möglich. Das erwärmte Kühlöl tritt über die mit dem Bezugszeichen 180 gekennzeichnete Öffnung aus dem Torsionsschwingungsdämpfer aus, wo es vom Kühlölabfluss 175 aufgenommen wird.

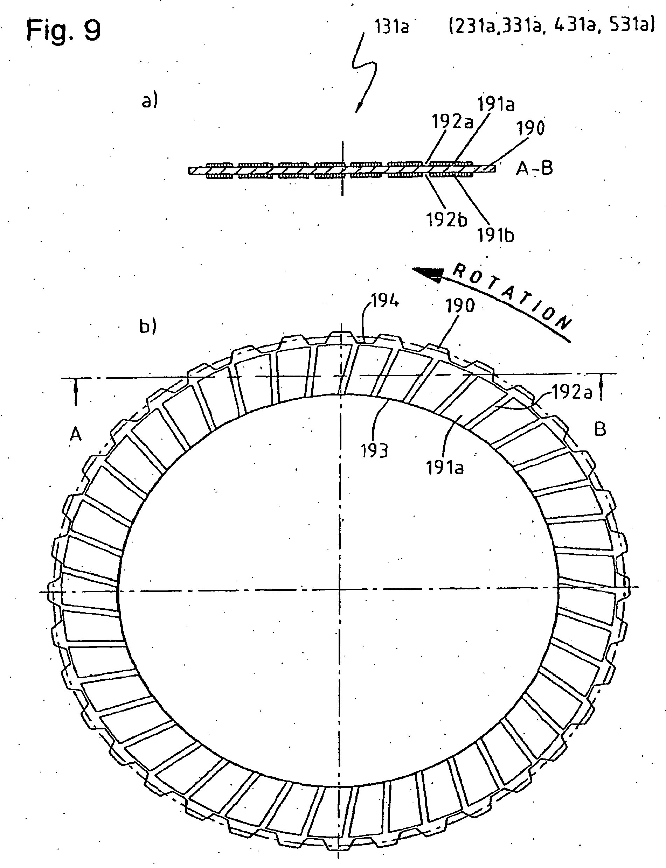

Die Reiblamellen 131a können zur Erzielung einer hohen Durchfluss bzw, Umwätzleistung von Kühföl beispielsweise wie in der Figur 9 dargestellt istausgebildet sein. Hier verlaufen Nuten 192a, 192b im auf dem Trägerblech 190 aufgebrachten Reibbelag 191a, 191b vom Innenrand 193 der Reiblamelle 131a zum Außenrand 194, wobei sie entgegen der Drehrichtung (ROTATION) von Innen nach Außengeneigt verlaufen. Der Neigungswinkel beträgt hier etwa 15".

Zum hydraulischen Betätigen des Betätigungskolbens 109 ist im vorliegenden Ausführungsbeispiel eine Druckmittelzufuhr über die Kanäle 170, 173, 174 vorgesehen. Das Druckmittel wird entlang dem Pfad 172 in den Druckraum 178 geleitet. Das Druckmittel verschiebt den Belätigungskolben 109 entgegen der Federkraft der Tellerfeder 118 gegen die Druckplatte 141b, welche wiederum das gesamte Federpaket 131a, 131b gegen die mittels eines Sicherungsrings 133 gehaltene Endplatte 141a drückt. Der Druckraum 178 ist mittels der Dichtungen 112 und 123 gegen den Kühlmitletraum abgedichtel.

Der Zeichnungsfigur 2 entnimmt man weiter einen außerhalb des Kupplungsgehäuses angeordneten und dieses koaxial umgreifenden Kurbelwellenstartergenerator 166. Dieser Kurbelwellenstartergenerator 166 besteht aus einem Rotor 167 und einem Stator 168. Der Kurbetwellenstartergenerator 167 ist drehfest mittels mehrerer in Umfangsrichtung angeordneter Schrauben 163 mit dem Außenumlang derSchwungscheibe 150 sowie der flexiblen Scheibe 103 verbunden.

Der Stator 168 ist ortsfest angeordnet. Dessen Fixierung ist der Zeichnungsfigur nicht zu entnehmen.

Wird die Kupplungseinrichtung K2 als Anfahrkupplungseinrichtung anstelle eines Drehmomentwandlers verwendet, so lässt sich im konventionellen Wandlerbauraum im Antriebsstrang eines Kraftfahrzeuges aufgrund der radial kleinen Bauweise der Kupplungseinrichtung K2 sowohl die Anfahrkupplung bestehend aus Lamellenkupplung L2 und Torsionsschwingungsdämpfer T2 als auch der Kurbelwellenstartergenerator 166 unterbringen.

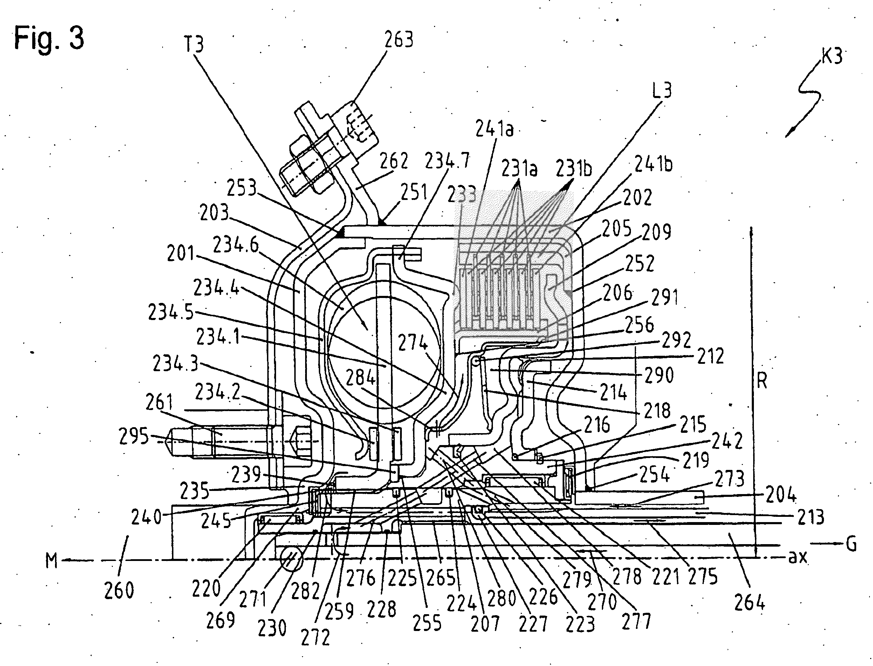

Die Figur 3 zeigt ein drittes Ausführungsbeispiel einer Kupplungseinrichtung K3. Diese Kupplungseinrichtung K3 umfasst eine Lamellenkupplung L3 und einen Torsionsschwingungsdämpfer T3. Die Lamellenkupplung L3 und der Torsionsschwingungsdämpfer T3 sind in Reihe geschaltet. Die Lamellenkupplung L3 und der Torsionsschwingungsdämpfer T3 weisen eine gemeinsame Drehachse ax auf. Lamellenkupplung L3 und Torsionsschwingungsdämpfer T3 sind in Richtung der Drehachse ax nebeneinander angeordnet. Ein von einem (hier nicht dargestellten). VerbrennungsmotorM erzeugtes Drehmoment wird überdie Lamellenkupplung L3 der Kupplungseinrichtung K3 zugeführt und von einem (hier nicht dargestellten) Getriebe G über den Torsionsschwingungsdämpfer T3 abgeführt.

Die Lamellenkupplung L3 umfasst wie vorher einen Außenlamellen 231a tragenden Außenlamellenträger 205 und einen Innenlamellen 231b tragenden Innenlamellenträger 206. Bestandteil der Lamellenkupplung L3 ist wiederum ein Betätigungskolben 209.

Der Torsionsschwingungsdämpfer T3 umfasst auch hier ein Primärelement und ein mittels einer Federeinrichtung gekoppeltes und gegenüber diesem um die Drehachse ax verdrehbares Sekundärelement.

Das Primärelement umfasst zwei eine Dämpferschale bildende Dämpferhalbschalen 234.4, 234.5. Außenumfangsseitig weisen diese Dämpferhalbschalen 234.4 und 234.5 zur drehfesten Verbindung eine Klauenverzahnung 234.7 auf.

Das Sekundärelement umfasst einen scheibenförmigen Dämpferflansch 234.1. Dieser ist in etwa axial mittig zwischen den beiden Dämpferhalbschaten 234.4 und 234.5 angeordnet und wird von diesen gehäuseartig umgriffen.

Die Federeinrichtung umfasst eine Mehrzahl in Umfangsrichtung hintereinander angeordneter Schraubenfedern 234.6, welche mittels entsprechender Federaufteiler 234.2, 234.3 in Reihe geschaltet sind. Die Schraubenfedern 234.6 sind axial zwischen den beiden Dämpferhalbschalen 234.4 und 234.5 des Primärelements angeordnet und werden von diesen im Wesentlichen formschlüssig umschlossen.

Die Dämpferhalbschalen 234.4 und 234.5 weisen in der vorstehend beschriebenen Weise axial gegenüberliegende und nach radial innen gerichtete Mitnehmer auf. Der Dämpferilansch 234.1 weist korrespondierend zu diesen radial nach außen gerichtete Mitnehmer auf. gegen die sich jeweils entsprechende Schraubenfedem 234.6 abstützen.

Der Innenlamellenträger 206 der Lamellenkupplung L3 ist an einer umlaufenden Schweißstelle 256 mit der abtriebsseitigen Dämpferhalbschale 234.4 des Torsionsschwingungsdämpfers T3 verschweißt.

Das scheibenförmige. Sekundärelement 234.1 ist drehfest mit einer Getriebeeingangsnabe 207 verbunden, welche sowohl den Torsionsschwingungsdämpfer T3 als auch die Lamellenkupplung L3 zentral durchsetzt. Die drehleste Verbindung zwischen Sekundärelement 234.1 und Getriebeeingangsnabe 207 ist mittels einer Steckverzahnung 259 realisiert.

Die Getriebeeingangsnabe 207 ist zur Aufnahme einer Abtriebswelle. im Beispiel einer Getriebeeingangswelle 264, vorgesehen. Eine drehfeste Verbindung zwischen der Getriebeeingangsnabe 207 und der Getriebeeingangswelle 264 ist im vorliegenden Beispiel über eine Steckverzahnung 265 hergestellt.

Die Lamellenkupplung L3 und der Torsionsschwingungsdämpfer T3 sind in einem gemeinsamen abgeschlossenen Kupplungsgehäuse untergebracht. Dieses Kupplungsgehäuse besteht aus einer ersten motorseitigen Halbschale 201 und einer zweiten getriebeseitigen Halbschale 202. Beide Halbschalen 201, 202 sind miteinander verschweißt (Schweißstelle 253).

Der Außenlamellenträger 205 der Lamellenkupplung L3 ist getriebeseitig mit derzweiten Halbschale 1 des Kupplungsgehäuses verschweißt (Schweißstelle 252).

Die erste Halbschale 201 des Kupplungsgehäuses ist motorseitig in der Art eines Zylinders 235 ausgebildet. Die zweite Halbschale 202 des Kupplungsgehäuses ist getriebeseitig mit einer Führungshülse 204 verschweißt (Schweißstelle 254).

Die Gelriebeeingangsnabe 207 ist nunmehr einerseits mittels eines Radiallagers 220 an einem Pilotzapfen 269 des Zylinders 235 und andererseits mittels eines Radiallagers 221 (wahlweise kann hier sefbstverständlich auch eine Führungsbuchse verwendet werden) an einer die Lamellenkupplung L3 koaxial zentral durchsetzenden Kupplungsnabe 242 drehbar gelagert.

Neben der drehbaren Lagerung um die Drehachse ax mittels der vorstehend beschriebenen Führungsbuchsen oder Radiallager 220, 221 sind auch Axiallager vorgesehen, welche eine axiale Bewegung der Getriebeeingangswelle 207 und der Kupplungsnabe 242 verhindern, insbesondere ist ein motorseiliges Axiallager 245 zwischen einer radial verlaufenden Wandung des Zylinders 235 und der Getriebeeingangsnabe 207 vorgesehen. Ferner ist ein getriebeseitiges Axiallager 219 vorgesehen, welches sich einerseits gegen eine radial verlaufende Wandung der zweiten Halbschale 202 des Kupplungsgehäuses und andererseits sowohl gegen die Getriebeeingangsnabe 207 als auch gegen die Kupplungsnabe 242 abstützt.

Die abtriebsseitige Dämpferhalbschale 234.4 des Primärelements ist mittels einer Verschweißung (Schweißstelle 255) mit der Kupplungsnabe 242 drehfest verbunden. Eine axiale Verschiebung des Sekundärelements 234.1 des Torsionsschwingungsdämpfers T3 wird mittels einer Buchse 295 und mittels einer Feder 239/Ring 240-Anordnung verhindert.

Um die Dämpfungseigenschaften auf die jeweiligen Bedürfnisse anzupassen, kann die auf der Buchse 295 basierende Lagerung bei Bedarf durch die Federvorrichtung. welche im vorliegenden Fall mittels des Federelements 239 und des Sicherungsrings 240 realisiert ist, mit einem vorbestimmten Reibmoment beaufschlagt werden.

Der Betätigungskolben 209 ist im vorliegenden Ausführungsbeispiel einerseits an einer koaxial verlaufenden zylindrischen Wandung eines mit der Kupplungsnabe 242 axial unverschieblich verbundenen Stützkolbens 214 (Sprengring 215) sowie an einer ebenfalls koaxial zur Drehachse ax verlaufenden Wandung der Kupptungsnabe axial verschieblich geführt und mittels entsprechender Dichtungen 212, 216 und 223 gegen das umgebende Gehäuse abgedichtet.

In seiner Ruhestellung wird der Betätigungskolben 209 mittels einer Tellerfeder 218, welche sich außenumfangsseitig gegen einen Abstützring 292 abstutzt, gegen die Innenwandung des Stützkolbens 214 gedrückt gehalten.

An die zweite Halbschale 202 ist im vorliegenden Ausführungsbeispiel ein schräg nach radial außen ausgerichteter Ring 262 angeschweißt (Schweißstelle 251). An diesen Ring 262 ist eine flexible Scheibe 203 an sich bekannter Art angeschraubt (Schraube 263).

Innenumfangsseitig ist diese flexible Scheibe 203 mit einer Antriebswelle 260, beispielsweise mit einer Kurbelwelle, welche von dem Motor M angetrieben wird. verschraubt (Schraube 261). Anstelle einer Verschraubung kann selbstverständlich auch eine Steckverzahnung oder dergleichen verwendet werden.

Ein von dem (Verbrennungs)-Motor M erzeugles Motormoment wird demnach über die flexible Scheibe 203 ins Kupplungsgehäuse 201, 202 eingeleitet. Von dort wird es über den Außenlamellenträger 205 an das Lamellenpaket 231a, 231b, die Dämpferhalbschalen 234.4, 234.5, die Schraubenfedern 234.6, Federaufteiler 234.2, 234.3. Dämpferflansch 234.1 und die Getriebeeingangsnabe 207 auf die Getriebeeingangswelle 264 und damit ins Getriebe G geleitet.

Um den BauraumderKupplungseinrichtung K3 möglichst klein zu halten, ist wiederum vorgesehen, dass der Außenlamellenträger 205 und die äußere der beiden Dämpferhalbschalen 234.4, 234.5 einen im Wesentlichen gleichen Außenradius R aufweisen.

Das Verhältnis aus Federdurchmesser D und dem sich aus dem Abstand des Federmittelpunkts zur Rotationsachse ax ergebenden Wirkradius W ist zu 0.55 gewählt.

Zur Kühlung jeglicher Reibelemente, insbesondere der Außen- und Innenlamellen 231a, 231b ist das gesamte Kupplungsgehäuse 201, 202 kühlöldurchströmt. Dieses Kühlöl wird über entsprechende Kanäle zu- bzw. abgeführt und unterliegt damit einem Austausch.

Zu- und abführende Kühlölkanäle befinden sich im Bereich der Getriebeeingangswelle 264. Der kühlölzuführende Kanal ist in der Zeichnungsfigur 3 mit dem Bezugszeichen 273 gekennzeichnet, der kühlölabführende Kanal ist durch einen mit dem Bezugszeichen 275 gekennzeichnete Pfeil markiert.

Ausgehend von der Kühlölzufuhr 273 strömt das Kühlöl mittels eines O-Rings 226 und eines Rings 227 gegen die Umgebung abgedichtet in einen Kühlölkanal 279 in der Getriebeeingangsnabe 207. Von dort fließt es weiter in einen Kühlölkanal 280 in der Kuppfungsnabe 242 und durch einen Kühlölkanal 284 an dessen Ausgang es in das Kupplungsgehäuse eintritt. Aufgrund der bei Rotation auftretenden Fliehkraft wird das noch kältere Kühlöl nach außen geschleudert und ein Teil 274 tritt durch entsprechende Öffnungen im Innenlamellenträger 206 zwischen die Reib- und Stahllamellen 231a, 231b ein. Am Außenumfang des Außenlamellenträgers tritt das Kühlöl durch entsprechende (hier nicht dargestellte) Öffnungen aus und gelangt von dort durch entsprechende (hier nicht dargestellte) Öffnungen im Dämpfergehäuse in den Torsionsschwingungsdämpfer T3. Je nach Anordnung der einzelnen Elemente innerhalbder Kupplungsanordnung K3 ist auch ein Kühlölfluss von der Lamellenkupplung L3 zum Torsionsschwingungsdämpfer T3 oder umgekehrt möglich. Das erwärmte Kühlöl tritt über die mit dem Bezugszeichen 282 gekennzeichnete Öffnung aus dem Torsionsschwingungsdämpfer T3 aus und gelangt dabei in den Kühlölabfuhrkanal 275.

Zum hydraulischen Betätigen des Betätigungskolbens 209 ist darüber hinaus eine Druckmittelzufuhr vorgesehen, welche im vortiegenden Ausführungsbeispiel die Getriebeeingangswelle 264 zentral durchsetzt und mit dem Bezugszeichen 270 gekennzeichnet ist. Ein dort eintretendes Druckmittel wird entlang dem Pfad 272, mittels einer Kugel 271 und diversen Dichtungsringen 228, 230 gegen die Umgebung abgedichtet, in einen Druckmittelkanal 276 in der Getriebeeingangsnabe 207, weiter gegen die Umgebung mittels der Dichtringe 225, 224 abgedichtet, in einen Druckmittelkanal 277 in der Kupplungsnabe 242 in einen Druckraum 278 geleitet. Ein über diesen Druckmittelkanal 270, 272, 276, 277 zugeführtes Druckmittel verschiebt den Betätigungskolben 209 entgegen der Federkraft der Tellerfeder 218 gegen die Druckplatte 241b, welche wiederum das gesamte Federpaket 231a, 231b gegen eine mittels eines Sicherungsrings 233 gehaltene Endplatte 241a drückt. Der Druckraum 278 ist mittels der Dichtungen 212, 216 und 223 gegen den Kühlmittelraum abgedichtet.

Abweichend von den bisherigen Ausführungsvarianten ist auch ein zum Druckmittelraum 278 korrespondierender sogenannter Ausgleichsraum 290 vorgesehen. Dieser Ausgleichskolbenraum 290 wird durch einen Ausgleichskolben 291 und den Betätigungskolben 209 gebildet. Der Ausgleichskolben 291 funktioniert folgendermaßen: Der Kolben befindet sich auf der Abtriebsseite. Beim Anfahren rotiert schon das Gehäuse 201, 202. Als Folge tritt ein Fliehöldruck auf. Der Kolben 209 steht noch still (kein Fliehöldruck). Infolgedessen drückt der Fliehöldruck aus dem Gehäuse gegen den Kolben 209. Daher ist das übertragene Moment kleiner als der Sollwert. Deshalb wird das Teil 291 quasi als Schott vor den Kolben 291 gelegt. Der Ausgleichsraum 290 ist hier eine Art Ölberuhigungsraum. so dass sich hier beim Anfahren ebenfalls "nicht drehendes Öl- befindet.

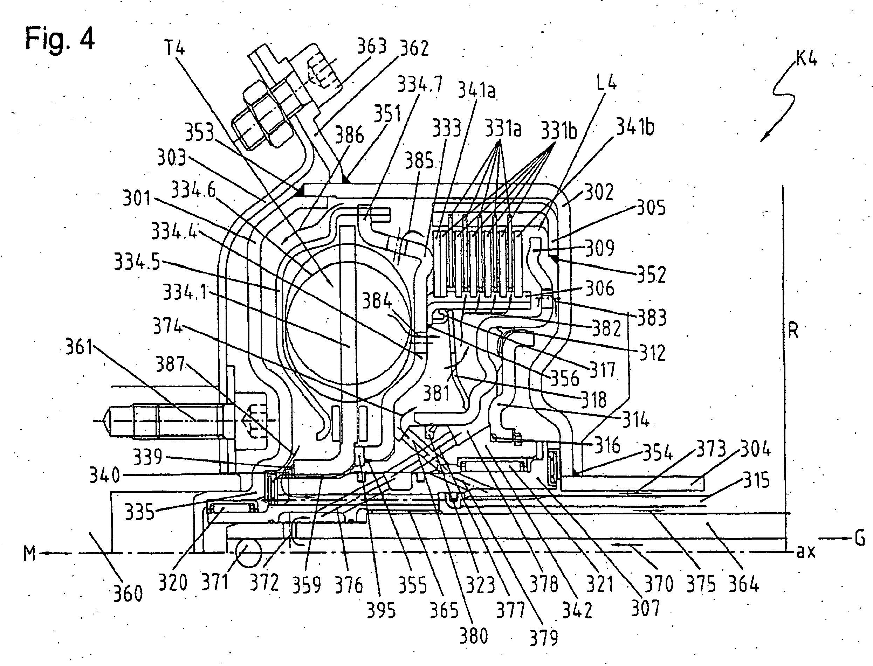

Die Figur 4 zeigt ein viertes Ausführungsbeispiel einer Kupplungseinrichtung K4. Diese Kupplungseinrichtung K4 besteht wie die vorstehend beschriebenen aus einer Lamellenkupplung L4 und einem Torsionsschwingungsdämpfer T4. Die Lamellenkupplung L4 und der Torsionsschwingungsdämpfer T4 sind in Reihe geschaltet. Die Lamellenkupplung L4 und der Torsionsschwingungsdämpfer T4 weisen eine gemeinsame Drehachse ax auf. Lamellenkupplung L4 und Torsionsschwingungsdämpfer T4 sind in Achsrichtung nebeneinander angeordnet. Ein von einem (hier nicht dargestellten) Verbrennungsmotor M erzeugtes Drehmoment wird über die Lamellenkupplung L4 der Kupplungseinrichtung K4 zugeführt und wird von einem (hier nicht dargestellten) Getriebe G über den Torsionsschwingungsdämpfer T4 abgeführt.

Die Lamellenkupplung L4 ist wie vorher beschrieben ausgebildet. Sie umfasst einen Außenlamellen 331a tragenden Außenlamellenträger 305 und einen Innenlamellen 331b tragenden Innenlamellenträger 306. Bestandteil der Lamellenkupplung L4 istein Betätigungskolben 309, welcher dazu vorgesehen ist. die verzahnungsartig ineinandergreifenden und ein Lamellenpakel bildenden Außen- und Innenlamellen 331a, 331b in reibschlüssigen Kontakt zu verbringen. indem er beim Betätigen auf eine Druckplatte 341 b drückend einwirkt. Dieser Betätigungskolben 309 wird im nicht betätigten Zustand aufgrund der Federkraft einer als Tellerfeder 318 ausgebildeten Rückstellfeder in einer Ruhestellung gehalten.

Der Torsionsschwingungsdämpfer T4 umfasst ebenfalls in an sich bekannter Weise ein Primärelement und ein mittels einer Federeinrichtung gekoppettes und gegenüber diesem verdrehbares Sekundärelement.

Das Primärelement umfasst vorliegend zwei eine Dämpferschale bildende Dämpferhalbschalen 334.4, 334.5. Außenumfangsseitig weisen diese Dämpferhalbschalen 334.4 und 334.5 eine Kamm- oder Klauenverzahnung 334.7 auf, mit Hilfe derer sie die Dämpferschale bildend drehfest miteinander verbunden sind.

Das Sekundärelement umfasst einen scheibenförmigen Dämpferflansch 334.1. Dieser ist in etwa axial mittig zwischen den beiden Dämpferhalbschalen 334.4 und 334.5 angeordnet und wird von diesen gehäuseartig umgriffen.

Die Federeinrichtung umfasst eine Mehrzahl in Umfangsrichtung hintereinander angeordnete und mittels Federaufteiler 334.2, 334.3 in Reihe geschalteten Schraubenfedern 334.6. Diese Schraubenfedern 334.6 und Federaufteiler 334.2, 334.3 sind axial zwischen den beiden Dämpferhalbschalen 334.4 und 334.5 des Primärelements angeordnet und werden von diesen im Wesentlichen formschlüssig umschlossen.

Die Dämpferhalbschalen 334.4 und 334.5 weisen (hier nicht dargestellte) axialgegenüberliegende und nach radial innen gerichtete Mitnehmer auf. Der Dämpferflansch 334.1 weist korrespondierend zu diesen radial nach außen gerichtete Mitnehmer auf. gegen die sich jeweils entsprechende Schraubenfedern 334.6 abstützen.

Der Innenlamellenträger 306 der Lamellenkupplung L4 ist an einer. Schweißstelle 356 mit der abtriebsseitigen Dämpferhalbschale 334.4 des Torsionsschwingungsdämpfers T4 verschweißt.

Das scheibenförmige Sekundärelement 334.1 ist drehfest mit einer Getriebeeingangsnabe 307 verbunden, welche sowohl den Torsionsschwingungsdämpfer T4 als auch die Lamellenkupplung L4 zentral durchsetzt. Die drehfeste Verbindung zwischen Sekundärelement 334.1 und Getriebeeingangsnabe 307 ist mittels einer Steckverzahnung 359 realisiert.

Die Getriebeeingangsnabe 307 ist zur Aufnahme einer Getriebeeingangswelle 364 vorgesehen. Eine drehfeste Verbindung zwischen der Getriebeeingangsnabe 307 und der Getriebeeingangswelle 364 ist im vorliegenden Beispiel über eine Steckverzahnung 365 hergestellt.

Die Lamellenkupplung L4 und der Torsionsschwingungsdämpfer T4 sind in einem gemeinsamen abgeschlossenen Kupplungsgehäuse untergebracht. Dieses Kupplungsgehäuse besteht aus einer ersten motorseitigen Halbschale 301 und einer zweiten getriebeseitigen Halbschale 302. Beide Halbschalen 301, 302 sind miteinander verschweißt (Schweißstelle 353).

Der Außenlamellenträger 305 der Lamellenkupplung L4 ist getriebeseitig mit der zweiten Halbschale 301 des Kupplungsgehäuses verschweißt (Schweißstelle 352).

Die erste Halbschale 301 des Kupplungsgehäuses ist motorseitig in der Art eines Zylinders 335 ausgebildet. Die zweite Halbschale 302 des Kupplungsgehäuses ist getriebeseitig mit einer Führungshülse 304 verschweißt (Schweißstelle 354).

Die Getriebeeingangsnabe 307 ist nunmehr einerseits mittels eines Radiallagers 320 an einem Pilotzapfen 369 des Zylinders 335 und andererseits mittels eines Radiallagers 321 an einer die Lamellenkupplung L4 koaxial zentral durchsetzenden Kupplungsnabe 342 drehbar gelagert.

Neben der drehbaren Lagerung um die Drehachse ax mittels der vorstehend beschriebenen Führungsbuchsen oder Radiallager 320, 321 sind auch Axiallager vorgesehen, welche eine axiale Bewegung der Getriebeeingangswelle 307 und der Kupplungsnabe 342 verhindern. Ins besondere ist ein motorseitiges Axiallager 345 zwischen einer radial verlaufenden Wandung des Zylinders 335 und der Getriebeeingangsnabe 307 vorgesehen. Ferner ist ein getriebeseitiges Axiallager 319 vorgesehen, welches sich einerseits gegen eine radial verlaufende Wandung der zweiten Halbschale 302 des Kupplungsgehäuses und andererseits sowohl gegen die Getriebeeingangsnabe 307 als auch gegen die Kupplungsnabe 342 abstützt.

Die abtriebsseitige Dämpferhalbschale 334.4 des Primärelements ist mittels einer Verschweißung (Schweißstelle 355) mit der Kupplungsnabe 342 drehfest verbunden. Eine axiale Verschiebung des Sekundärelements 334.1 des Torsionsschwingungsdämpfers T4 wird mittels einer Buchse 395 und mittels einer Feder 339/Ring 340-Anordnung verhindert.

Um die Dämpfungseigenschaftenauf die jeweiligen Bedürfnisse anzupassen, kann die auf der Buchse 395 basierenden Lagerung bei Bedarf durch eine Federvorrichtung, welche im vorliegenden Fall mittels des Federelements 339 und des Sicherungsrings 340 realisiert ist. mit einem vorbestimmten Reibmoment beaufschlagt werden.

Der Betätigungskolben 309 ist im vorliegenden Ausführungsbeispiel einerseits an einer koaxial verlaufenden zylindrischen Wandung eines mit der Kupplungsnabe 342 axial unverschieblich verbundenen Stützkolbens 314 sowie an einer ebenfalls koaxial zur Drehachse ax verlaufenden Wandung der Kupplungsnabe 342 axial verschieblich geführt und mittels entsprechender Dichtungen 312, 316 und 323 gegen die Umgebung abgedichtet.

In seiner Ruhestellung wird der Betätigungskolben 309 mittels einer Tellerfeder 318, welche sich au-βenumfangsseitig gegen eine äußere Führungshülse 317 abstützt, gegen die Innenwandung des Stützkolbens 314 gedrückt gehalten.

An die zweite Halbschale 302 ist im vorliegenden Ausführungsbeispiel ein schräg nach radial außen ausgerichteter Ring 362 angeschweißt (Schweißstelle 351). An diesen Ring 362 ist eine flexible Scheibe 303 an sich bekannter Art angeschraubt (Schraube 363).

Innenumfangsseitig ist diese flexible Scheibe 303 mit einer Kurbelwelle 360 verschraubt(Schraube 361).

Ein von dem Verbrennungsmotor M erzeugtes Motormoment wird demnach über die flexible Scheibe 303 ins Kupplungsgehäuse 301, 302 eingeleitet. Von dort wird es über den Außenlamellenträger 305 an das Lamellenpaket 331a, 331b, die Dämpferhalbschalen 334.4, 334.5, die Schraubenfedern 334.6, Federaufteiler 334.2. 34.3. Dämpferflansch 334.1 und die Getriebeeingangsnabe 307 auf die Getriebeeingangswelle 364 und damit ins Getriebe G geleitet.

Das gesamte Kupplungsgehäuse ist kühlöldurchströmt. Dieses Kühlöl wird wieder über entsprechende Kanäle 373, 375 zu-bzw. abgeführt. Es unterliegt in der Kupplungseinrichtung einem Austausch in der vorstehend beschriebenen Art (vgl. Kühlölstrom 381, 382, 383, 384, 385, 386, 387).

Zum hydraulischen Betätigen des Betätigungskolbens 309 ist wiederum eine Druckmittelzufuhr der vorstehend beschriebenen Art vorgesehen. Sie durchsetzt die Getriebeeingangswelle 364 zentral und ist mit dem Bezugszeichen 370 gekennzeichnet. Ein dort eintretendes Druckmittel wird entlang dem Pfad 372, mittels einer Kugel 371 und diversen Dichtungsringen gegen die Umgebung abgedichtet in den Druckraum 378 geleitet. Ein über diesen Druckmittelkanal 370, 372, 376 zugeführtes Druckmittel verschiebt den Betätigungskolben 309 entgegen der Federkraft der Tellerfeder 318 gegen die Druckplatte 341b. welche wiederum das gesamte Federpaket 331a, 331b gegen die mittels eines Sicherungsrings 333 gehaltene Endplatte 341a drückt. Ein Ausgleichsraum wie im vorstehend beschriebenen Ausführungsbeispiel ist hier nicht vorgesehen.

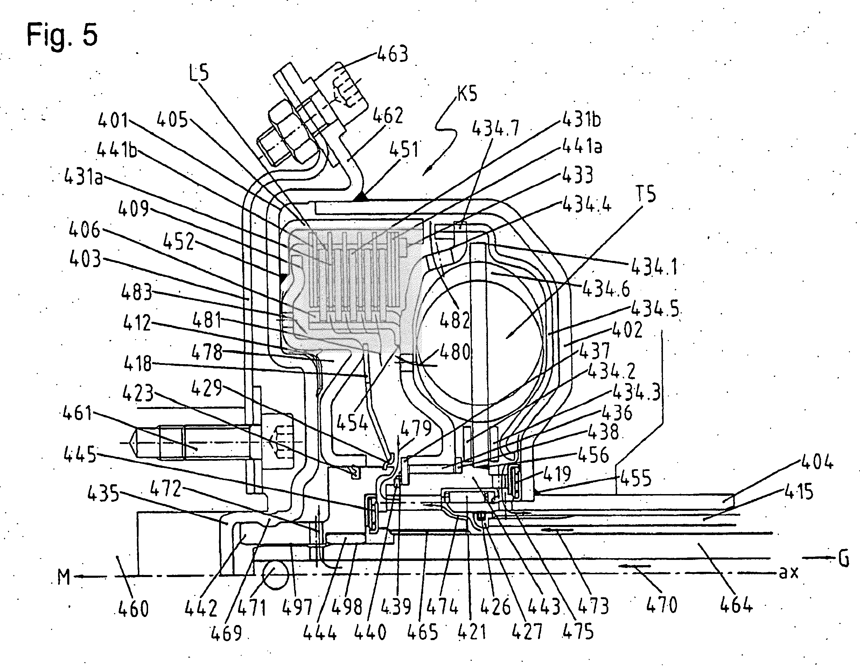

Die Figur 5 zeigt ein fünftes Ausführungsbeispiel einer Kupplungseinrichtung K5. Diese Kupplungseinrichtung K5 umfasst eine Lamellenkupplung L5 und einen Torsionsschwingungsdämpfer T5. Die Lamellenkupplung L5 und der Torsionsschwingungsdämpfer T5 sind in Reihe geschaltet. Die Lamellenkupplung L5 und der Torsionsschwingungsdämpfer T5 weisen eine gemeinsame Drehachse ax auf. Lamellenkupplung L5 und Torsionsschwingungsdämpfer T5 sind in Achsrichtung nebeneinander angeordnet. Ein beispielsweise von einem (hier nicht dargestellten) VerbrennungsmotorM erzeugtes Drehmoment wird über die Lamellenkupplung L5 der Kupplungseinrichtung K5 zugeführt und kann beispielsweise von einem (hier nicht dargestellten) Getriebe G über den Torsionsschwingungsdämpfer T5 abgeführt werden.

Die Lamellenkupplung L5 ist in an sich bekannter Art und Weise ausgebildet. Sie umfasst einen Außenlamellen 431a tragenden Außenlamellenträger 405 und einen Innenlamellen 431b tragenden Innenlamellenträger 406. Bestandteil der Lamellenkupplung L5 ist weiterhin ein Betätigungskolben 409. welcher dazu vorgesehen ist, die verzahnungsartig ineinandergreifenden und ein Lamellenpaket bildenden Außen- und Innenlamellen 431a, 431b in reibschlüssigen Kontakt zu verbringen, indem er beim Betätigen auf eine Druckplatte 441b drükkend einwirkt. Dieser Betätigungskolben 409 wird im nicht betätigten Zustand aufgrund der Federkraft einer als Tellerfeder 418 ausgebildeten Rückstellfeder in einer Ruhestellung gehaltene.

Der Torsionsschwingungsdämpfer T5 umfasst ein Primärelement und ein mittels einer Federeinrichtung gekoppeltes und gegenüber diesem verdrehbares Sekundärelement.

Das Primärelement umfasst vorliegend zwei eine Dämpferschale bildende Dämpferhalbschalen 434.4, 434.5. Außenumfangsseitig weisen diese Dämpferhalbschalen 434.4 und 434.5 eine Kamm- oder Klauenverzahnung 434.7 auf, mit Hilfe derer sie die Dämpferschale bildend drehfest miteinander verbunden sind.

Das Sekundärelement umfasst einen scheibenförmigen Dämpferflansch 434.1. Dieser ist in etwa axial mittig zwischen den beiden Dämaferhalbschalen 434.4 und 434.5 angeordnet und wird von diesen gehäuseartig umgriffen.

Die Federeinrichtung umfasst eine Mehrzahl in Umfangsrichtung hintereinander angeordnete Schraubenfedern 434.6. Diese Schraubenfedern 434.6 sind axial zwischen den beiden Dämpferhalbschalen 434.4 und 434.5 des Primärelements angeordnet und werden von diesen im Wesentlichen formschlüssig umschlossen.

Die Dämpferhalbschalen 434.4 und 434.5 weisen (hier nicht dargestellte) axial gegenüberliegende und nach radial innen gerichtete Mitnehmer auf. Der Dämpferflansch 434.1 weist korrespondierend zu diesen radial nach außen gerichtete Mitnehmer auf. gegen die sich jeweils entsprechende Schraubenfedern 434.6 abstützen. Ferner sind vortiegend beidseits des Dämpferflansches 434.1 Federaufteiler 434.2, 434.3 angeordnet, welche die Schraubenfedern 434.6 in Umfangsrichtung hintereinander schalten.

Der Innenlamellenträger 406 der Lamellenkupplung L5 ist an einer Schweißstelle 454 mit der antriebsseitigen Dämpferhalbschale 434.4 des Torsionsschwingungsdämpfers T5 verschweißt.

Das scheibenförmige Sekundärelement 434.1 ist drehfest mit einer Getriebeeingangsnabe 443 verbunden, welche den Torsionsschwingungsdämpfer T5 nicht jedoch die Lamellenkupplung L5 zentral durchsetzt. Die drehfeste Verbindung zwischen. Sekundärelement 434.1 und Getriebeeingangsnabe 443 ist mittels einer Verschweißung (Schweißstelle 456) realisiert. Denkbar ist hier selbstverständlich auch eine Steckverzahnung oder dergleichen.

Die Getriebeeingangsnabe 443 ist zur Aufnahme einer Abtriebswelle, in Beispiel einer Getriebeeingangswelle 454. vorgesehen. Eine drehfeste Verbindung zwischen der Getriebeeingangsnabe 443 und der Getriebeeingangswelle 464 ist im vorliegenden Beispiel über eine Steckverzahnung 465 hergestellt.

Die Lamellenkupplung L5 und der Torsionsschwingungsdämpfer T5 sind in einem gemeinsamen abgeschlossenen Kupplungsgehäuse untergebracht. Dieses Kupplungsgehäuse besteht aus einer ersten Halbschale 40 und einer zweiten Halbschale 402. Beide Halbschalen 401, 402 sind miteinander verschweißt (Schweißstelle 451).

Der Außenlamellenträger 405 der Lamellenkupplung L5 ist antriebsseitig mit der ersten Halbschale 401 des Kupplungsgehäuses verschweißt (Schweißstelle 452). Die erste Halbschale 401 des Kupplungsgehäuses weist motorseitig einen Zylinder 435 auf. In einem Pilotzapfen 469 ist eine die Lamellenkupplung L5. nicht aber den Torsionsschwingungsdämpfer T5, zentral durchsetzende Kupplungsnabe 442 eingesetzt und mit diesem verstemmt.

Die Getriebeeingangsnabe 443 ist mittels eines Radiallagers 421 (wahlweise kann hier selbstverständlich auch eine Führungsbuchse verwendet werden) an einer drehfest mit der zweiten Halbschale 402 des Kupplungsgehäuses verbundenen getriebeseitigen Führungshülse 404 drehbar gelagert. Die drehfeste Verbindung zwischen Führungshülse 404 und zweiter Halbschale 402 wird hier mittels einer Verschweißung (Schweißstelle 455) hergestellt.

Neben der drehbaren Lagerung um die Achse ax mittels des vorstehend beschriebenen Radiallagers 421 sind auch Axiallager vorgesehen, welche eine axiale Bewegung der Getriebeeingangsnabe 443 verhindern. Insbesondere ist ein motorseitiges Axiallager 445 zwischen einer radialen Wandung der Kupplungsnabe 442 und der Getriebeeingangsnabe 443 sowie ein getriebeseitiges Axiallager 419 zwischen einer radialen Wandung der zweiten Halbschale 402 des Kupplungsgehäuses und der Getriebeeingangsnabe 443 vorgesehen.

Die Getriebeeingangswelle 464 ist aus Verschleißgründen mittels einer Führungsbuchse 444 an der Kupplungsnabe 442 drehbar gelagert.

Die antriebsseitige Dämpferhalbschale 434.4 des Primärelements ist mittels einer Führungsbuchse 4.36 (alternativ kann selbstverständlich auch ein Radiallager verwendet werden) an der Getriebeeingangsnabe 443 drehbar gelagert. Eine axiale Verschiebung wird dabei mittels. zweier Anlaufscheiben 437 und 438 verhindert.

Um die Dämpfungseigenschaften auf die jeweiligen Bedürfnisse anzupassen, kann die Lagerung bestehend aus dem Radiallager 436 und den beiden Anlaufscheiben 437 und 438 bei Bedarf durch eine Federvorrichtung. welche im vorliegenden Fall mittels eines Federelements 439 und eines Sicherungsrings 440 realisiert ist mit einem vorbestimmten Reibmoment beaufschlagt werden.

Der Betätigungskolben 409 ist im vorliegenden Ausführungsbeispiel einerseits an einer koaxial verlaufenden Wandung der ersten Halbschale 401 des Kupplungsgehäuses sowie an einer ebenfalls koaxial zur Drehachse ax verlaufenden Wandung der Kupplungsnabe 442 axial verschieblich geführt und mittels entsprechender Dichtungen 412 und 423 gegen die Umgebung abgedichtet.

In seiner Ruhestellung wird der Betätigungskolben 409 mittels einer Tellerfeder 418, welche sich innenumfangsseitig gegen einen axial an der Kupplungsnabe 442 fixierten Haltering 429 abstützt, gegen die Innenwandung der ersten Halbschale 401 des Kupplungsgehäuses gedrückt gehalten.

Die erste Halbschale 401 weist im vorliegenden Ausführungsbeispiel einen schräg nach radial außen ausgerichteten Ring 462 auf. An diesen Ring 462 ist eine flexible Scheibe 403 an sich bekannter Art angeschraubt (Schraube 463).

Innenumfangsseitig ist diese flexible Scheibe 403 mit einer Antriebswelle 460, beispielsweise mit einer Kurbelwelle, welche von dem Motor M angetrieben wird, verschraubt. Anstelle einer Verschraubung kann selbstverständlich auch eine Steckverzahnung oder dergleichen gewählt werden.

Ein von dem Motor M erzeugtes Motormoment wird über die flexible Scheibe 403 ins Kupplungsgehäuse 401, 402 eingeleitet. Von dort wird es über den Außenlamellenträger 405 auf das Lamellenpaket 431a, 431b und weiter auf den Innenlamellenträger 406 übertragen. Vom Innenlamellenträger 406 wird das Moment auf die Dämplerhalbschalen 4 34.4, 434.5, die Schraubenfedern 434.6. Federaufteiler 434.2, 434.3, den Dämpferflansch 434.1, die Getriebeeingangsnabe 443 weiterauf die Getriebeeingangswelle 464 geleitet.

Um den Bauraum der Kupplungseinrichtung K5 möglichst klein zu halten, ist erfindungsgemäß vorgesehen. dass der Außenlamellenträger 405 und die äußere der beiden Dämpferhalbschalen 434.4, 34.5 einen im Wesentlichen gleichen Außenradius R aufweisen. Da die radialen Abmessungen des Torsionsschwingungsdämpfers T5 in der Regel durch die für den jeweiligen Anwendungsfall erforderliche Federkapazität vorgegeben sind. bestimmen sich die axialen Abmessungen der Kupplungseinrichtung K5 allein aus der Anzahl der notwendigen Lamellen 431a, 431b, um die entsprechende Kupplungskapazität bereitzustellen.

Im vorliegenden Fall ist das Verhältnis aus Federdurchmesser D und dem sich aus dem Abstand des Federmittelpunkts zur Rotationsachse ax ergebenden Wirkradius W zu 0.55 gewählt. Zwar befinden sich die Schraubenfedern 434.6 zur Erzielung des geringen Außenradius R der Kupplungs einrichtung K5 auf einementsprechenden geringen Wirkradius W. jedoch ist aufgrund des großen Federdurchmessers D eine ausreichende Federkapazität gewährleistet.

Da eine Anfahrkupplung der dargestellten Art bei einer Anfahrt insbesondere am Berg mit hoher Anhängerlast. einer hohen Wärmebeanspruchung ausgesetzt ist. ist es erforderlich. für eine gute Kühlung jeglicher Reibelemente, insbesondere der Außen- und Innenlamellen 431a, 431b zu sorgen. Zu diesem Zweck ist das gesamte Kupplungsgehäuse 401, 402 öldurchströmt. Dieses Kühlöl wird über entsprechende Kanäle zu- bzw. abgeführt und unterliegt demzufolge einem gewissen Austausch. Zu- und abführende Kühlölkanäle befinden sich im Bereich der Getriebeeingangswelle 464. Der Kühlöl zuführende Kanal ist in der Zeichnungsfigur 1 mit dem Bezugszeichen 473 gekennzeichnet. der Kühlöl abführende Kanal ist mit dem Bezugszeichen 475 gekennzeichnet.

Ausgehend von der Kühlölzufuhr 473 strömt das Kühlöl, mittels eines O-Rings 426 und eines Rings 427 gegen den zwischen der getriebeseitigen Führungshülse 404 und einer Statorwelle 415 verlaufenden kühlölabführenden Kanal 475 gedichtet, in den Kühlölkanal 474 und dann in das Kupplungsgehäuse 401, 402 ein (vgl. Bezugszeichen 479). Aufgrund der bei Rotation auftretenden Fliehkraft wird das noch kältere Kühlöl radial nach außen geschleudert und tritt durch entsprechende Öffnungen 481 im Innenlamellenträger 406 zwischen die Reib- und Stahllamellen 431a, 431b ein. Am Außenumfang des Außenlamellenträgers 405 tritt das Kühlöl durch entsprechende nicht dargestellte Öffnungen aus.

Weiterhin weist auch der Betätigungskolben 409 Öffnungen 473 auf, welche einen Kühlöltransfer vom Innenumfang des Außenlamellenträgers 405 her zulassen. Vom Außenumfang des Außenlamellenträgers 405 gelangt das Kühlöl durch entsprechende Öffnungen (z.B. 482) im Dämpfergehäuse 434.4 in den Torsionsschwingungsdämpfer T5. Je nach Anordnung der einzelnen Elemente innerhalb der Kupplungsanordnung K5 ist auch ein Kühlölfluss vom Torsionsschwingungsdämpfer T5 über den Kanal 480 zur Lamellenkupplung L5 oder umgekehrt möglich. Das erwärmte Kühlöl tritt über die mit dem Bezugszeichen 475 gekennzeichnete Öffnung aus dem Torsionsschwingungsdämpfer T5 aus.

Zum hydraulischen Betätigen des Betätigungskolbens 409 ist darüber hinaus eine Druckmittelzufuhr vorgesehen, welche im vorliegenden Ausführungsbeispiel die Getriebeeingangswelle 464 zentral durchsetzt und mit dem Bezugszeichen 470 gekennzeichnetist. Ein dort eintretendes Druckmittel (z.B. Hydrauliköl. Drucköl oder dergleichen) wird entlang dem Pfad 472, mittels einer Kugel 471 und diversen gegebenenfalls optional vorgesehenen Dichtungen 497, 498 gegen die Umgebung abgedichtet in den Druckraum 476 geleitet. Ein über diesen Druckmittelkanal 470, 472 zugeführtes Druckmittel verschiebt den Betätigungskolben 409 entgegen der Federkraft der Tellerfeder 418 gegen die Druckplatte 41b, welche wiederum das gesamte Federpaket 431a, 431b gegen die mittels eines Sicherungsrings 433 gehaltene Endplatte 441a drückt. Der Druckraum 478 ist mittels der Dichtungen 412 und 423 gegen den Kühlmittelraum abgedichtet.

Die Figur 6 zeigt ein sechstes Ausführungsbeispiel einer Kupplungseinrichtung K6. Diese unfasst eine Lamellenkupplung L6 und einen Torsionsschwingungsdämpfer T6. Lamellenkupplung L6 und der Torsionsschwingungsdämpfer T6 sind in Reihe geschaltet. Lamellenkupplung L6 und Torsionsschwingungsdämpfer T6 weisen eine gemeinsame Drehachse ax auf. Lamellenkupplung L6 und Torsionsschwingungsdämpfer T6 sind in Achsrichtung nebeneinander angeordnet. Ein von einem (hier nicht dargestellten) Verbrennungsmotor M erzeugtes Drehmoment wird über die Lamellenkupplung L6 der Kupplungseinrichtung K6 zugeführt und wird von dieser von einem (hier nicht dargestellten) Getriebe G über den Torsionsschwingungsdämpfer T1 abgeführt.

Die Lamellenkupplung L6. Sie umfasst einen Außenlamellenträger 505 mit Außenlamellen 531a und einen Innenlamellenträger 506 mit Innenlamellen 531b. Bestandteil der Lamellenkupplung L6 ist weiterhin ein Betätigungskolben 509, um die verzahnungsartig ineinandergreifenden und ein Lamellenpaket bildenden Außen- und Innenlamellen 531a, 531b in reibschlüssigen Kontakt zu verbringen.

Der Torsionsschwingungsdämpfer T6 umfasst wiederum ein Primärelement und ein mittels einer Federeinrichtung gekoppeltes und gegenüber diesem verdrehbares Sekundärelement.

Das Primärelement umfasst zwei Dämpferhalbschalen 534.4, 534.5. Außenumfangsseitig weisen diese Dämpferhalbschalen 534.4 und 534.5 eine Klauenverzahnung 534.7 auf, mit Hilfe derer sie eine Dämpferschate bildend drehfest miteinander verbunden sind.

Das Sekundärelement umfasst einen scheibenförmigen Dampferflansch 534.1. Dieser ist in etwa axial mittig zwischen den beiden Dämpferhalbschalen 534.4 und 534.5 angeordnet und wird von diesen gehäuseartig umgriffen.

Die Federeinrichtung umfasst wiederum eine Mehrzahl in Umfangsrichtung hintereinander angeordnete und mittels zweier Federaufteiler/Dividerbleche 534.2, 534.3 in Reihe geschaltete Schraubenfedern 534.6. Diese Schraubenfedern 534.6 und die Federaufteiler/Dividerbleche 534.2, 534.3 sind axial zwischen den beiden Dämpferhalbschalen 534.4 und 534.5 des Primärelements angeordnet und werden von diesen im Wesentlichen formschlüssig umschlossen.

Die Dämpferhalbschalen 534.4 und 534.5 weisen in üblicher Art und Weise (hier nicht dargestellte) axial gegenüberliegende und nach radial innen gerichtete Mitnehmer auf. Der Dämpferflansch 534.1 weist korrespondierend zu diesen radial nach außen gerichtete Mitnehmer auf, gegen die sich jeweils entsprechende Schraubenfedern 534.6 abstützen.

Der Innenlamellenträger 506 der Lamellenkupplung L6 ist an einer umlaufenden Schweißstelle 554 mit der antriebsseitigen Dämpferhalbschale 534.4 des Torsionsschwingungsdämpfers T6 verschweißt.

Das scheibenförmige Sekundärelement 534.1 ist drehfest mit einer Getriebeeingangsnabe 543 verbunden. welche den Torsionsschwingungsdämpfer T6, nicht aber die Lamellenkupplung L6 zentral durchsetzt. Die drehfeste Verbindung zwischen Sekundärelement 534.1 und Getriebeeingangsnabe 543 ist mittels einer Verschweißung (Schweißstelle 556) realisiert. Denkbar ist hier selbstverständlich auch eine Steckverzahnung oder dergleichen.

Die Getriebeeingangsnabe 543 ist zur Aufnahme einer Abtriebswelle, in Beispiel einer Getriebeeingangswelle 564 vorgesehen. Eine drehfeste Verbindung zwischen der Getriebeeingangsnabe 543 und der Getriebeeingangswelle 564 ist im vorliegenden Beispiel über eine Steckverzahnung 565 hergestellt.

Die Lamellenkupplung L6 und der Torsionsschwingungsdämpfer T6 sind in einem gemeinsamen abgeschlossenen Kupplungsgehäuse untergebracht. Dieses Kupplungsgehäuse umfasst eine erste Halbschale 501 und eine zweite Halbschale 502. Beide Halbschalen 501, 502 sind miteinander verschweißt (Schweißstelle 551).

Der Außenlamellenträger 505 der Lamellenkupplung L6 ist antriebsseitig mit der ersten Halbschale 501 des Kupplungsgehäuses verschweißt (Schweißstelle 552). In einen Pilotzapfen 569 der ersten Halbschale 501 ist eine die Lamellenkupplung L6 zentral durchsetzende Kupplungsnabe 542 eingepresst und mit dieser verstemmt.

Diese Kupplungsnabe 542 nimmt die Getriebeeingangswelle 564 drehbar um die Drehachse ax gelagert auf. Diese Lagerung stellt auch die Lagerung für die Getriebeeingangsnabe 543 dar.

Neben der drehbaren Lagerung um die Achse ax mittels der Kupplungsnabe 542 sind auch Axiallager vorgesehen, welche eine axiale Bewegung der Getriebeeingangsnabe 543 verhindern. Insbesondere ist ein motorseitiges Axiallager 545 zwischen einer in radialer Richtung verlaufenden Wandung der Kupplungsnabe 542 und der Getriebeeingangsnabe 543 sowie ein getriebeseitiges Axiallager 519 zwischen einer radialen Wandung der zweiten Halbschale 502 des Kupplungsgehäuses und der Getriebeeingangsnabe 543 vorgesehen.

Die antriebsseitige Dämpferhalbschale 534.4 des Primärelements ist mittels einer Führungsbuchse 536 (alternativ kann selbstverständlich auch ein Radiallager verwendet werden) an der Kupplungsnabe 542 drehbar gelagert. Eine axiale Verschiebung wird mittels zweier Anlaufscheiben 537 und 538 verhindert.

Der Betätigungskolben 509 ist im vorliegenden Ausführungsbeispiel einerseits an einer koaxial verlaufenden zylinderförmigen Wandung der ersten Halbschale 501 des Kupplungsgehäuses sowie an einer ebenfalls koaxial zur Drehachse ax verlaufenden Zylinderwandung der Kupptungsnabe 542 axial verschieblich geführt und mittels entsprechender Dichtungen 512 und 523 gegen das umgebende Gehäuse abgedichlet.

In seiner Ruhestellung wird der Betätigungskolben 509 mittels einer Tellerfeder 518, welche sich innenumfangsseitig gegen einen axial mit der Kupplungsnabe 542 verbundenen Haltering 529 abstützt; gegen die Innenwandung der ersten Halbschale 501 des Kupplungsgehäuses gedrückt gehalten.

Die erste Halbschale 501 weist im vorliegenden Ausführungsbeispiel einen schräg nach radial außen ausgerichteten Ring 562 auf. An diesen Ring 562 ist eine flexible Scheibe 503 der vorstehend beschriebenen Art angeschraubt (Schraube 563).

Innenumfangsseitig ist diese flexible Scheibe 503 mit einer Antriebswelle 560, beispielsweise mit einer Kurbelwelle, welche von dem Motor M angetrieben wird, verschraubt (Schraube 563). Anstelle einer Verschraubung kann selbstverständlich auch eine Steckverzahnung oder dergleichen gewählt werden.

Ein von dem Motor M erzeugtes Motormoment wird demzufolge über die flexible Scheibe 503 ins Kupplungsgehäuse 501, 502 eingeleitet. Von dort wird es über den Außenlamellenträger 505 auf das Lamellenpaket 531a, 531b und von dort auf den Innenlamellenträger 506 übertragen. Vom Innenlamellenträger 506 geht es weiter auf die Dämpferhalbschalen 534.4, 534.5, die Schraubenfedern 534.6 und Federaufteiler 534.2, 534.3, den Dämpferflansch 534.1 und die Getriebeeingangsnabe 543. Diese überträgt das Drehmoment auf die Getriebeeingangswelle 564.

Um den Bauraum der Kupplungseinrichtung K6 möglichst klein zu halten, ist erfindungsgemäß vorgesehen. dass der Außenlamellenträger 505 und die äußere der beiden Dämpferhalbschalen 534.4, 534.5 einen im Wesentlichen gleichen Außenradius R aufweisen. Da die radialen Abmessungen des Torsionsschwingungsdämpfers T6 in der Regel durch die für den jeweiligen Anwendungsfall erforderliche Federkapazität vorgegeben sind. bestimmen sich die axialen Abmessungen der Kupplungseinrichtung K6 allein aus der Anzahl der notwendigen Lamellen 531a, 531b, um die entsprechende Kupplungskapazität bereitzustellen.

Im vorliegenden Fall ist das Verhältnis aus Federdurchmesser D und dem sich aus dem Abstand des Federmittelpunkts zur Rotationsachse ax ergebenden Wirkradius W zu 0.55 gewählt. Zwar befinden sich die Schraubenfedern 534.6 zur Erzielung des geringen Außenradius R der Kupplungseinrichtung K6 auf einem entsprechenden geringen Wirkradius W, jedoch ist aufgrund des großen Federdurchmessers D eine ausreichende Federkapazität gewährleistet.

Auch in diesem Ausführungsbeispiel ist das gesamte Kupplungsgehäuse 501, 502 zur Kühlung reibender Elemente öldurchströmt.

Dieses Kühlöl wird über entsprechende Kanäle zu- bzw. abgeführt und unterliegt demzufolge einem gewissen Austausch. Zu- und abführende Kühlölkanäte befinden sich im Bereich der Getriebeeingangswelle 564.

Ausgehend von der zwischen einer mit der Gehäusehalbschale 502 verschweißten (Schweißnaht 555) getriebeseitigen Führungshülse 504 und einer Statorwelle 515 verlaufenden Kühlölzufuhr 573 strömt das Kühlöt - mittels eines O-Rings 526 und eines Rings 527 gegen den zwischen der Statorwelle 515 und der Getriebeeingangswelle 564 verlaufenden kühlölabführenden Kanal 575 abgedichlet - durch die Kühlölkanat 579 und 580 in das Kupplungsgehäuse. Aufgrund der bei Rotation auftretenden Fliehkraft wird das noch kältere Kühlöl nach außen geschleudert und tritt durch entsprechende Öffnungen 582 im Innenlamellenträger 506 zwischen die Reib- und Stahllamellen 531a, 531b ein. AmAußenumfang des Außenlamellenträgers 505 tritt das Kühlöl durch entsprechende nicht dargestellte Öffnungen aus und gelang von dort durch entsprechende Öffnungen 583 im Dämpfergehäuse 534.4 in das Innere des Torsionsschwingungsdämpfers T6. Je nach Anordnung der einzelnen Elemente innerhalb der Kupplungsanordnung K6 ist auch ein Kühlölfluss von dem Torsionsschwingungsdämpfer T6 über einen Kanal 581 zur Lamellenkupplung L6 möglich. Das erwärmte Kühlöl tritt über die mit dem Bezugszeichen 585 gekennzeichnete Öffnung aus dem Torsionsschwingungsdämpfer T6 aus.

Weiterhin weist der Kolben 509 Öffnungen 584 auf, so dass ein Teil des umgewälzten Öles vom Innenumfang des Außenlamellenträgers 505 her wieder dem Lamellenpaket zugeführt werden kann. wobei es sich mit frischem (noch kälteren) Kühlöl vermischen kann.

Es ist vorteilhaft, die Lamellen 531a, 531b und die innerhalb des Kupplungsgehäuses 501, 502 liegenden Bauteile in geeigneter Weise zu gestallen, dass sie den Ölfluss innerhalb des Kupplungsgehäuses 501, 502 lenken und zwar derart, dass das Kühlöl innerhalb des Kupplungsgehäuses 501, 502 umgewälzt wird. Ein derartiger Umwälzstrom 586 entnimmt man der Zeichnungsfigur 7, welche die Kupplungseinrichtung gemäß der Figur 6 ohne störende Bezugszeichen zeigt. Durch geeignete Wahl und Formgebung innen liegender Bauteile sind bei einer Ölströmung 3 bis 10 l/min Umwälzförderleistungen von etwa 100 l/min erreichbar.

Zum hydraulischen Betätigen des Betätigungskolbens 509 ist darüber hinaus eine Druckmittelzufuhr vorgesehen, welche im vorliegenden Ausführungsbeispiel die Getriebeeingangswelle 564 zentral durchsetzt und mit dem Bezugszeichen 570 gekennzeichnet ist. Ein dort eintretendes Druckmittel wird entlang dem Pfad 572, mittels einer Kugel 571 und eines Dichtungsringes 528 gegen die Umgebung abgedichtet in den Druckraum 578 geleitet. Ein über diesen Druckmittelkanal 570, 572 zugeführtes Druckmittel verschiebt den Betätigungskolben 509 entgegen der Federkraft einer Tellerfeder 518 gegen die Druckplatte 541b, welche wiederum das gesamte Federpakel 531a, 531b gegen die mittels eines Sicherungsrings 533 gehaltene Endplatte 541a drückt. Der Druckraum 578 ist mittels der Dichtungen 512 und 523 gegen den Kühlmittelraum abgedichtet.

### Bezugszeichenliste

- 1: erste Halbschale des Kupplungsgehäuses
- 2: zweite Halbschale des Kupplungsgehäuses
- 3: flexible Scheibe
- 4: getriebeseitige Führungshütse
- 5: Außenlamellenträger
- 6: Innenlamellenträger
- 7: Getriebeeingangsnabe
- 9: Betätigungskolben geführt in erster Halbschale 1 und Zylinder 35
- 12: Dichtung
- 15: Statorwelle (fest)
- 18: Rückstellfeder = Tellerfeder
- 19: getriebeseitiges Axiallager
- 20: Führungsbuchse (wahlweise Radiallager)
- 21: Radiallager
- 23: Dichtung
- 25: Torlon-Ring = gleitender Dichtring
- 26: O-Ring
- 27: Ring
- 28: O-Ring
- 29: Haltering
- 31a: Reiblamelle
- 31b: Stahllamelle
- 33: Sicherungsring
- 34.1: Dämpferflansch
- 34.2: Federaufteiler/Dividerblech
- 34.2a: Ring
- 34.2b: Federabstützung
- 34.3: Federaufteiler/Dividerblech
- 34.3a: Ring
- 34.3b: Federabstützung
- 34.4: Dämpferhalbschale
- 34.5: Dämpferhalbschale
- 34.6: Schraubenfeder
- 34.7: Kammverzahnung
- 34.8: Mitnehmer
- 35: Zylinder für Getriebeeingangsnabe 7 und Buchse 20 Führungsbuchse (wahlweise Radiallager)
- 36: Radiallager oder Führungsbuchse
- 37: Anlaufscheibe
- 38: Anlaufscheibe
- 39: Federelement (um die Lagerstelle in vorbestimmte Position zu verbringen)
- 40: Sicherungsring
- 41a: Endplatte
- 41b: Druckplatte
- 45: motorseitiges Axiallager
- 51: Schweißstelle
- 52: Schweißstelle
- 53: Schweißstelle
- 54: Schweißstelle
- 55: Schweißstelle
- 56: Schweißstelle (wahlweise Steckverzahnung)
- 60: Antriebswelle = Kurbelwelle
- 61: Schraube
- 62: Ring
- 63: Schraube
- 64: Abtriebswelle = Getriebeeingangswelle
- 65: Steckverzahnung
- 69: Pilotzapfen
- 70: Druckölzufuhr
- 71: Kugel zum Abdichten
- 72: Druckölzufuhr
- 73: Kühlölzufuhr
- 74: Kühlölstrom
- 75: Kühlölabfuhr
- 76: Druckölzufuhröffnung
- 77: Druckölzufuhröffnung
- 78: Druckölraum
- 79: Druckölzufuhr
- 80: Umfangsnut
- 81: Kühlölstrom
- 82: Kühlölstrom
- 83: Kühlölstrom

- 101: erste Halbschale des Kupplungsgehäuses
- 102: zweite Halbschale des Kupplungsgehäuses
- 103: flexible Scheibe
- 104: getriebeseitige Führungshülse
- 105: Außenlamellenträger
- 106: Innenlamellenträger
- 107: Getriebeeingangsnabe
- 109: Betätigungskolben geführt In zweiter Halbschale 102 und Getriebeeingangsnabe 107
- 112: Dichtung
- 115: Statorwelle (fest)
- 117: äußere Führungshülse
- 118: Rückstellfeder = Tellerfeder
- 119: getriebeseitiges Axiallager
- 120: Radiallager
- 121: Radiallager
- 123: Dichtung
- 125: (Torlon-Ring =) gleitender Dichtring
- 128: O-Ring
- 129: Haltering
- 131a: Reiblamelle
- 131b: Stahllamelle
- 133: Sicherungsring
- 134.1: Dämpferflansch
- 134.2: Federaufteiler/Dividerblech
- 134.3: Federaufteiler/Dividerblech
- 134.4: Dämpferhalbschale
- 134.5: Dämpferhalbschale
- 134.6: Schraubenfeder
- 134.7: Kammverzahnung
- 135: Zylinder für Getriebeeingangsnabe 107 und Buchse
- 120 136: Radiallager oder Führungsbuchse
- 137: Anlaufscheibe
- 138: Anlaufscheibe
- 139: Federelement zum Verbringen der Lagerstelle in bestimmte Position
- 140: Sicherungsring
- 141a: Endplatte
- 141b: Druckplatte
- 145: motorseitiges Axiallager
- 146: Zylinder
- 150: Schwungscheibe
- 151: Schweißstelle
- 152: Schweißstelle
- 153: Schweißstelle
- 154: Schweißstelle
- 155: Schweißstelle
- 156: Schweißstelle
- 157: Steckverzahnung
- 159: Niete
- 160: Antriebswelle = Kurbelwelle
- 161: Schraube
- 162: Ring
- 163: Schraube
- 164: Abtriebswelle = Getriebeeingangswelle
- 165: Steckverzahnung
- 166: Kurbelwellenstartergenerator
- 167: Rotor des Kurbelwellenstartergenerators 166
- 168: Stator des Kurbelwellenstartergenerators 166
- 169: Pilotzapfen
- 170: Druckölzufuhr
- 172: Druckölzufuhr
- 173: Druckölzufuhr
- 174: Druckölstrom
- 175: Kühlölabfuhr
- 178: Druckölraum
- 179: Kühlölstrom
- 180: Kühlölstrom
- 181: Drosselöffnung

- 190: Stahlträger / Trägerblech
- 191a: Reibbelag
- 191b: Relbbelag
- 192a: Nut
- 192b: Nut
- 193: Innenrand
- 194: Außenrand

- 201: erste Halbschale des Kupplungsgehäuses
- 202: zweite Halbschale des Kupplungsgehäuses
- 203: flexible Scheibe
- 204: getriebeseitige Führungshülse
- 205: Außenlamellenträger
- 206: Innenlamellenträger
- 207: Getriebeeingangsnabe
- 209: Betätigungskolben geführt in Stützkolben 214 und Nabe 242
- 212: Dichtung
- 213: Statorwelle
- 214: Stützkolben
- 215: Sprengring
- 216: Dichtung
- 218: Rückstellfeder = Tellerfeder
- 219: getriebeseitiges Axiallager
- 220: motorseitiges Radiallager
- 221: getriebeseitiges Radiallager
- 223: Dichtung
- 225: Torlon-Ring = gleitender Dichtring
- 226: O-Ring
- 227: Ring
- 228: O-Ring
- 230: O-Ring
- 231a: Reiblamelle
- 231b: Stahllamelle
- 233: Stützring
- 234.1: Dämpferflansch
- 234.2: Federaufteiler/Dividorblech
- 234.3: Federaufteiler/Dividorblech
- 234.4: Dämpferhalbschale
- 234.5: Dämpferhalbschale
- 234.6: Schraubenfeder
- 234.7: Kammverzahnung
- 235: Zylinder für Getriebeeingangsnabe 207 und Buchse
- 220: motorseitiges Radiallager
- 239: Federelement zum Verbringen der Lagerstelle in bestimmte Position
- 240: Sicherungsring
- 241a: Endplatte
- 241b: Druckplatte
- 242: Nabe
- 245: motorseitiges Axiallager
- 251: Schweißstelle
- 252: Schweißstelle
- 253: Schweißstelle
- 254: Schweißstelle
- 255: Schweißstelle
- 256: Schweißstelle
- 259: Steckverzahnung
- 260: Antriebswelle = Kurbelwelle
- 261: Schraube
- 262: Ring
- 263: Schraube
- 264: Antriebswelle = Getriebeeingangswelle
- 265: Steckverzahnung
- 269: Pilotzapfen
- 270: Druckölzufuhr
- 271: Kugel zum Abdichten
- 272: Druckölzufuhr
- 273: Kühlölzufuhr
- 274: Kühlölstrom
- 275: Kühlölabfuhr
- 276: Druckölzufuhr
- 277: Druckölzufuhr
- 278: Druckölraum
- 279: Kühlölzufuhr
- 280: Kühlölzufuhr
- 282: Kühlölstrom
- 284: Kühlölzufuhr
- 290: Ausgleichsraum
- 291: Ausgleichskolben und Leitblech
- 292: Abstützring
- 295: Führungsbuchse
- 301: erste Halbschale des Kupplungsgehäuses
- 302: zweite Halbschale des Kupplungsgehäuses
- 303: flexible Scheibe
- 304: getriebeseitige Führungshülse
- 305: Außenlamellenträger
- 306: Innenlamellenträger
- 307: Getriebeeingangsnabe
- 309: Betätigungskolben geführt in Stützkolben 314 und Nabe 342
- 312: Dichtung
- 314: Stützkolben
- 315: Statorwelle
- 316: Dichtung
- 317: äußere Führungshülse
- 318: Rückstellfeder = Tellerfeder
- 320: Radiallager
- 321: Radiallager
- 323: Dichtung
- 331a: Reiblamelle
- 331b: Stahllamelle
- 333: Stützring
- 334.1: Dämpferflansch
- 334.4: Dämpferhalbschale
- 334.5: Dämpferhalbschale
- 334.6: Schraubenfeder
- 334.7: Kammverzahnung
- 335: Zylinder
- 339: Federelement
- 340: Sicherungsring
- 341a: Endplatte
- 341b: Druckplatte
- 342: Nabe
- 351: Schweißstelle
- 352: Schweißstelle
- 353: Schweißstelle
- 354: Schweißstelle
- 355: Schweißstelle
- 356: Schweißstelle
- 359: Steckverzahnung
- 360: Antriebswelle = Kurbelwelle
- 361: Schraube
- 362: Ring
- 363: Schraube
- 364: Abtriebswelle = Getriebeeingangswelle
- 365: Steckverzahnung
- 370: Druckölzufuhr
- 371: Kugel zum Abdichten
- 372: Druckölzufuhr
- 373: Kühlölzufuhr
- 374.: Kühlölstrom
- 375: Kühlölabfuhr
- 376: Druckölzufuhr
- 377: Druckölzufuhr
- 378: Druckölraum
- 379: Kühlölzufuhr
- 380: Kühlölzufuhr
- 381: Kühlölstrom
- 382: Kühlölstrom
- 383: Kühlölstrom
- 384: Kühlölstrom
- 385: Kühlölstrom
- 386: Kühlölstrom
- 387: Kühlölstrom
- 395: Führungsbuchse

- 401: erste Halbschale des Kupplungsgehäuses
- 402: zweite Halbschale des Kupplungsgehäuses
- 403: flexible Scheibe
- 404: getriebeseitige Führungshülse
- 405: Außenlamellenträger
- 406: Innenlamellenträger
- 409: Betätigungskolben geführt in erster Halbschale 401 und Kupplungsnabe 442
- 412: Dichtung
- 415: Statorwelle
- 418: Rückstellfeder = Tellerfeder
- 419: getriebeseitiges Axiallager
- 420: Führungsbuchse
- 421: getriebeseitiges Radiallager
- 423: Dichtung
- 425: Torlon Ring = gleitender Dichtring
- 426: O-Ring
- 427: Ring
- 428: O-Ring
- 429: Haltering
- 431 a: Reiblamelle
- 431b: Stahllamelle
- 433: Sicherungsring
- 434.1: Dämpferflansch
- 434.2: Federaufteiler/Dividerblech
- 434.3: Federaufteiler/Dividerblech
- 434.4: Dämpferhalbschale
- 434.5: Dämpferhalbschale
- 434.6: Schraubenfeder
- 434.7: Kammverzahnung
- 436: Radiallager oder Führungsbuchse
- 437: Anlaufscheibe
- 438: Anlaufscheibe
- 439: Federelement zum Verbringen der Lagerstelle in bestimmte Position
- 440: Sicherungsring
- 441a: Endplatte
- 441b: Druckplatte
- 442: eingepreßte Kupplungsnabe
- 443: Getriebeeingangsnabe
- 444: Führungsbuchse
- 445: motorseitiges Axiallager
- 451: Schweißstelle
- 452: Schweißstelle
- 453: Schweißstelle
- 454: Schweißstelle
- 455: Schweißstelle
- 456: Schweißstelle
- 460: Antriebswelle = Kurbelwelle
- 461: Schraube
- 462: Ring
- 463: Schraube
- 464: Abtriebswelle = Getriebeeingangswelle
- 465: Steckverzahnung
- 469: Pilotzapfen
- 470: Druckölzufuhr
- 471: Kugel zum Abdichten
- 472: Druckölstrom
- 473: Kühlölzufuhr
- 474: Kühlölstrom
- 475: Kühlölabfuhr

- 478: Druckölzufuhr
- 479: Kühlölzufuhr
- 480: Kühlölzufuhr
- 481: Kühlölstrom
- 482: Kühlölstrom
- 483: Kühlölstrom
- 497: Dichtung (optional)
- 498: Dichtung (optional)

- 501: erste Halbschale des Kupplungsgehäuses
- 502: zweite Halbschale des Kupplungsgehäuses
- 503: flexible Scheibe
- 504: getriebeseitige Führungshülse
- 505: Außenlamellenträger
- 506: Innenlamellenträger
- 509: Betätigungskolben geführt in erster Halbschale 501 und Kupplungsnabe 542
- 512: Dichtung
- 515: Statorwelle
- 518: Rückstellfeder = Tellerfeder
- 519: getriebeseitiges Axiallager
- 523: Dichtung
- 525: Torlon Ring = gleitender Dichtring
- 526: O-Ring
- 528: O-Ring
- 529: Haltering
- 531a: Reiblamelle
- 531b: Stahllamelle
- 533: Sicherungsring
- 534.1: Dämpferllansch
- 534.2: Federaufteiler/Dividerblech
- 534.3: Federaufteiler/Dividerblech
- 534.4: Dämpferhalbschale
- 534.5: Dämpferhalbschale
- 534.6: Schraubenfeder
- 534.7: Kammverzahnung
- 536: Radiallager oder Führungsbuchse
- 537.: Anlaufscheibe
- 538: Anlaufscheibe
- 541 a: Endplatte
- 541b: Druckplatte
- 542: eingepreßte Kupplungsnabe
- 543: Getriebeeingangsnabe
- 545: motorseitiges Axiallager
- 551: Schweißstelle
- 552: Schweißstelle
- 554: Schweißstelle
- 555: Schweißstelle
- 556: Schweißstelle
- 560: Abtriebswelle = Kurbelwelle
- 561: Schraube
- 562: Ring
- 563: Schraube
- 564: Antriebswelle = Getriebeeingangswelle
- 565: Steckverzahnung
- 569: Pilotzapfen
- 570: Druckölzufuhr
- 571: Kugel zum Abdichten
- 572: Druckölzufuhr
- 573: Kühlölzufuhr
- 575: Kühlölabfuhr
- 579: Druckölraum
- 580: Kühlölstrom
- 581: Kühlölstrom
- 582: Kühlölstrom
- 583: Kühlölstrom
- 584: Kühlölstrom
- 585: Kühlölstrom
- 586: interner Umwälzölstrom
- ax: Achse
- L1: Lamellenkupplung
- L2: Lamellenkupplung
- L3: Lamellenkupplung
- L4: Lamellenkupplung
- L5: Lamellenkupplung
- L6: Lamellenkupplung
- T1: Torsionsschwingungsdämpfer
- T2: Torsionsschwingungsdämpfer
- T3: Torsionsschwingungsdämpfer
- T4: Torsionsschwingungsdämpfer
- T5: Torsionsschwingungsdämpfer
- T6: Torsionsschwingungsdämpfer

- D: Federdurchmesser
- R: Außenradius
- W: Wirkradius

- M: Motor
- G: Getriebe

- K1: Kupplungseinrichtung
- K2: Kupplungseinrichtung
- K3: Kupplungseinrichtung
- K4: Kupplungseinrichtung
- K5: Kupplungseinrichtung
- K6: Kupplungseinrichtung

## Patentansprüche

1. Anfahrkupplungseinrichtung ( K5, K6)
- mit einer Lamellenkupplung (L5, L6) mit einem Außenlamellen (431a, 531a) tragenden Außenlamellenträger (405, 505) und mit einem Innenlamellen (431b, 531b) tragenden Innenlamellenträger (406, 506) und
- mit einem in Reihe geschalteten Torsionsschwingungsdämpfer (T5, T6) mit einem Primärelement (434.4, 434.5; 534.4, 534.5) und mit einem mittels einer Federeinrichtung (434.6, 534.6) gekoppelten und gegenüber diesem verdrehbaren Sekundärelement (434.1, 534.1), wobei
- die Lamellenkupplung (L5, L6) und der Torsionsschwingungsdämpfer (T5, T6) eine gemeinsame Drehachse (ax) aufweisen und in Achsrichtung nebeneinander angeordnet sind, wobei
- der Außenlamellenträger (405, 505) und das Primärelement (434.4, 434.5; 534.4, 534.5) einen im Wesentlichen gleichen Außenradius(R) aufweisen und
- der Außenlamellenträger und das Sekundärelement einen im Wesentlichen gleichen Außenradius aufweisen, und wobei
- die Lamellenkupplung (L5, L6) und der Torsionsschwingungsdämpfer (T5, T6) in einem gemeinsamen geschlossenen Kupplungsgehäuse (401, 402; 501, 502) angeordnet sind,
**dadurch gekennzeichnet, dass**
- das Kupplungsgehäuse (401, 402; 501, 502) antreibbar ist und
- der Außenlamellenträger (431a, 531a) drehfest mit dem Kupplungsgehäuse (401 402; 501, 502) verbunden ist,
- dass das Sekundärelement einen Dämpferflansch (434.1, 534.1) umfasst und dass das Primärelement eine zwei Dämpferhalbschalen (434.4, 434.5; 534.4, 534.5) aufweisende Dämpferschale umfasst, welche den Dämpferflansch (434.1, 534.1) gehäuseartig umgreift,
- dass abtriebsseitig eine Getriebeeingangsnabe (443, 543) vorgesehen ist, welche mit einer Getriebeeingangswelle (464, 564) verbindbar ist,
- dass die Getriebeeingangsnabe (443, 543) den Torsionsschwingungsdämpfer (T5, T6), nicht aber die Lamellenkupplung (L5, L6) axial durchsetzt und dass eine Kupplungsnabe (442, 542) vorgesehen ist, welche die Lamellenkupplung (L5, L6) axial durchsetzt, und dass die Kupplungsnabe (442, 542) als Drehdurchführung und Gleitleger für die Getriebeeingangswelle (464, 564) ausgebildet ist.

2. Anfahr-Kupplungseinrichtung nach Anspruch 1,
**dadurch gekennzeichnet, dass** die Federeinrichtung (434.6, 534.6) wenigstens eine in Umfangsrichtung angeordnete Schraubenfeder (434.6, 534.6) umfasst und dass das Verhältnis aus Federdurchmesser (D) und Wirkradius (W) zwischen 0,5 und 0,75, vorzugsweise 0,6 ist.

3. Anfahr-Kupplungseinrichtung nach Anspruch 2,
**dadurch gekennzeichnet, dass** eine Mehrzahl von Schraubenfedern (434.6, 534.6) vorgesehen sind, welche mittels wenigstens eines Federaufteilers (434.2, 434.3; 534.2, 534.3) in Reihe geschaltet sind.

4. Anfahr-Kupplungseinrichtung nach einem der vorhergehenden Ansprüche,
**dadurch gekennzeichnet, dass** das Kupplungsgehäuse (401, 402; 501, 502) kühlmitteldurchströmt ist.

5. Anfahr-Kupplungseinrichtung nach Anspruch 4,
**dadurch gekennzeichnet, dass** die Lamellen (431 a, 431 b; 531 a, 531 b) und in der Anfahr-Kupplungseinrichtung (K5, K6) liegende Bauteile derart gestaltet sind, dass eine hohe Umwälzleistung des in dem Kupplungsgehäuse (401, 402; 501, 502) eingeschlossenen Kühlmittels gewährleistet ist.

6. Anfahr-Kupplungseinrichtung nach Anspruch 4 oder 5,
**dadurch gekennzeichnet, dass** das Kupplungsgehäuse aus zwei Halbschalen (401,402; 501, 502) gebildet ist.

7. Anfahr-Kupplungseinrichtung nach einem der vorangegangenen Ansprüche,
**dadurch gekennzeichnet, dass** das Primärelement (434.4, 434.5; 534.4, 534.5) und das Sekundärelement (434.1, 534.1) mittels einer Lagerung (436, 437, 438; 536, 537, 538) drehbar zueinander gelagert sind und dass die Lagerung (436, 437, 438; 536, 537, 538) bei Bedarf mittels einer Federvorrichtung (439, 440) mit einem vorgebbaren Reibmoment beaufschlagbar ist.

8. Anfahr-Kupplungseinrichtung nach Anspruch 7,
**dadurch gekennzeichnet, dass** das Sekundärelement (434.1, 534.1) drehfest mit der Getriebeeingangsnabe (443, 543) verbunden ist.

9. Anfahr-Kupplungseinrichtung nach Anspruch 8,
**dadurch gekennzeichnet, dass** zwischen der Getriebeeingangsnabe (443, 543) und der Kupplungsnabe (442, 542) ein Axiallager (445, 545) vorgesehen ist.

10. Anfahr-Kupplungseinrichtung nach einem der vorangegangenen Ansprüche,
**dadurch gekennzeichnet, dass** antriebsseitig eine flexible Scheibe (403, 503) vorgesehen ist, über welche die Anfahr-Kupplungseinrichtung (K5, K6) mit einem Motor (M), insbesondere Verbrennungsmotor verbindbar ist.

11. Anfahr-Kupplungseinrichtung nach einem der vorangegangenen Ansprüche,
**dadurch gekennzeichnet, dass** eine elektrische Maschine, z. B. ein Kurbelwellenstartergenerator (166) vorgesehen ist, welcher die Lamellenkupplung (L2) und/oder den Torsionsschwingungsdämpfer (T2) umfangsseitig umgreift.

12. Anfahr-Kupplungseinrichtung nach Anspruch 11,
**dadurch gekennzeichnet, dass** der Rotor (167) der elektrischen Maschine bzw. des Kurbelwellenstartergenerators (166) die Antriebsseite der Anfahr-Kupplungseinrichtung (K2) bildet.

## Claims

1. Start-up clutch device (K5, K6)
- having a multi-disc clutch (L5, L6) with an outer-disc carrier (405, 505) carrying outer discs (431a, 531a) and
with an inner-disc carrier (406, 506) carrying inner discs (431b, 531b) and
- having a torsional-vibration damper (T5, T6) connected in series
with a primary element (434.4, 434.5; 534.4, 534.5) and
with a secondary element (434.1, 534.1) coupled by means of a spring device (434.6, 534.6) and rotatable relative to said primary element,
- the multi-disc clutch (L5, L6) and the torsional-vibration damper (T5, T6) having a common axis of rotation (ax) and being arranged next to one another in the axial direction,
- the outer-disc carrier (405, 505) and the primary element (434.4, 434.5; 534.4, 534.5) having a substantially equal outer radius (R) and
- the outer-disc carrier and the secondary element having a substantially equal outer radius, and
- the multi-disc clutch (L5, L6) and the torsional-vibration damper (T5, T6) being arranged in a common closed clutch housing (401, 402; 501, 502),
**characterised in that**
- the clutch housing (401, 402; 501, 502) is drivable and
- the outer-disc carrier (431a, 531a) is connected in a rotationally fixed manner to the clutch housing (401, 402; 501, 502),
- **in that** the secondary element comprises a damper flange (434.1, 534.1) and **in that** the primary element comprises a damper shell having two damper half-shells (434.4, 434.5; 534.4, 534.5) and encompassing the damper flange (434.1, 534.1) in the manner of a housing,
- **in that,** at the output end, a gearbox input hub (443, 543) is provided, which can be connected to a gearbox input shaft (464, 564),
- **in that** the gearbox input hub (443, 543) passes axially through the torsional-vibration damper (T5, T6), but not through the multi-disc clutch (L5, L6) and **in that** a clutch hub (442, 542) is provided, which passes axially through the multi-disc clutch (L5, L6), and
- **in that** the clutch hub (442, 542) is designed as a rotary transmission leadthrough and sliding bearing for the gearbox input shaft (464, 564).

2. Start-up clutch device according to Claim 1,
**characterised in that** the spring device (434.6, 534.6) comprises at least one helical spring (434.6, 534.6) arranged in the circumferential direction and **in that** the ratio of spring diameter (D) and effective radius (W) is between 0.5 and 0.75, preferably 0.6.

3. Start-up clutch device according to Claim 2,
**characterised in that** a plurality of helical springs (434.6, 534.6) are provided, which are connected in series by means of at least one spring divider (434.2, 434.3; 534.2, 534.3).

4. Start-up clutch device according to one of the preceding claims,
**characterised in that** the clutch housing (401, 402; 501, 502) has coolant flowing through it.

5. Start-up clutch device according to Claim 4,
**characterised in that** the discs (431a, 431b; 531a, 531b) and components located in the clutch device (K5, K6) are designed in such a way that a high circulating capacity of the coolant enclosed in the clutch housing (401, 402; 501, 502) is ensured.

6. Start-up clutch device according to Claim 4 or 5,
**characterised in that** the clutch housing is formed from two half-shells (401, 402; 501, 502).

7. Start-up clutch device according to one of the preceding claims,
**characterised in that** the primary element (434.4, 434.5; 534.4, 534.5) and the secondary element (434.1, 534.1) are mounted rotatably in relation to one another by means of a mounting (436, 437, 438; 536, 537, 538) and **in that** the mounting (436, 437, 438; 536, 537, 538) can, if necessary, be subjected to a predeterminable friction moment by means of a spring device (439, 440).

8. Start-up clutch device according to Claim 7,
**characterised in that** the secondary element (434.1, 534.1) is connected in a rotationally fixed manner to the gearbox input hub (443, 543).

9. Start-up clutch device according to Claim 8,
**characterised in that** an axial bearing (445, 545) is provided between the gearbox input hub (443, 543) and the clutch hub (442, 542).

10. Start-up clutch device according to one of the preceding claims,
**characterised in that,** at the drive end, a flexible plate (403, 503) is provided, via which the start-up clutch device (K5, K6) can be connected to an engine (M), in particular internal combustion engine.

11. Start-up clutch device according to one of the preceding claims,
**characterised in that** an electric machine, e.g. a crankshaft starter generator (166), is provided, which circumferentially encompasses the multi-disc clutch (L2) and/or the torsional-vibration damper (T2).

12. Start-up clutch device according to Claim 11,
**characterised in that** the rotor (167) of the electric machine or of the crankshaft starter generator (166) forms the drive end of the start-up clutch device (K2).

## Revendications

1. Dispositif d'embrayage de démarrage (K5, K6),
- avec un embrayage à lamelles (L5, L6), avec un support de lamelles extérieures (405, 505) portant des lamelles extérieures (431a, 531a), et avec un support de lamelles intérieures (406, 506) portant des lamelles intérieures (431b, 531b), et
- avec un amortisseur de vibrations de torsion (T5, T6) branché en série,
avec un élément primaire (434.4, 434.5 ; 534.4, 534.5) et
avec un élément secondaire (434.1, 534.1), couplé au moyen d'un dispositif élastique (434.6, 534.6) et susceptible de tourner avec celui-ci, où
- l'embrayage à lamelles (L5, L6) et l'amortisseur de vibrations de torsion (T5, T6) présentent un axe de rotation (ax) commun, et sont disposés l'un à côté de l'autre en direction axiale, où
- le support de lamelles extérieures (405, 505) et l'élément primaire (434.4, 434.5 ; 534.4, 534.5) présentent un rayon extérieur (R) sensiblement identique et
- le support de lamelles extérieures et l'élément secondaire présentent un rayon extérieur sensiblement identique, et où
- l'embrayage à lamelles (L5, L6) et l'amortisseur de vibrations de torsion (T5, T6) sont disposés dans un carter d'embrayage (401, 402 ; 501, 502) fermé commun,
**caractérisé en ce que**
- le carter d'embrayage (401, 402 ; 501, 502) est susceptible d'être entraîné, et
- le support de lamelles extérieures (431a, 531a) est relié de façon assujettie en rotation au carter d'embrayage (401, 402 ; 501, 502).
- **en ce que** l'élément secondaire comprend une bride d'amortisseur (434.1, 534.1), et **en ce que** l'élément primaire comprend une coque d'amortisseur, présentant deux demi-coques d'amortisseur (434.4, 434.5 ; 534.4, 534.5), qui entoure à la façon d'un carter la bride d'amortisseur (434.1, 534.1)
- **en ce que,** côté mené, est prévu un moyeu d'entrée à la transmission (443, 543) pouvant être relié à un arbre d'entrée à la transmission (464, 564)
- **en ce que** le moyeu d'entrée à la transmission (443, 543) traverse axialement l'amortisseur de vibrations de torsion (T5, T6), mais pas l'embrayage à lamelles (L5, L6), et **en ce qu'**un moyeu d'embrayage (442, 542) est prévu, traversant axialement l'embrayage à lamelles (L5, L6) et
**en ce que** le moyeu d'embrayage (442, 542) est réalisé sous forme de passage de rotation et de palier à glissement, pour l'arbre d'entrée à la transmission (464, 564).

2. Dispositif d'embrayage de démarrage selon la revendication 1, **caractérisé en ce que** le dispositif élastique (434.6, 534.6) comprend au moins un ressort hélicoïdal (434.6, 534.6) disposé en direction périphérique et **en ce que** le rapport, entre le diamètre de ressort (D) et le rayon actif (W), est dans la fourchette comprise entre 0,5 et 0,75, de préférence est de 0,6.

3. Dispositif d'embrayage de démarrage selon la revendication 2, **caractérisé en ce qu**'une pluralité de ressorts hélicoïdaux (434.6, 534.6) sont prévus, branchés en série à l'aide d'au moins un répartiteur élastique (434.2, 434.3 ; 534.2, 534.3).

4. Dispositif d'embrayage de démarrage selon l'une des revendications précédentes, **caractérisé en ce que** le carter d'embrayage (401, 402 ; 501, 502) est parcouru par un écoulement de fluide de refroidissement.

5. Dispositif d'embrayage de démarrage selon la revendication 4, **caractérisé en ce que** les lamelles (431a, 431b ; 531a, 531b) et les composants placés dans le dispositif d'embrayage de démarrage (K5, K6) sont configurés de manière qu'une puissance de circulation élevée du fluide de refroidissement, enfermé dans le carter d'embrayage (401, 402 ; 501, 502), soit assurée.

6. Dispositif d'embrayage de démarrage selon la revendication 4 ou 5, **caractérisé en ce que** le carter d'embrayage est formé de deux demi-coques (401, 402 ; 501, 502).

7. Dispositif d'embrayage de démarrage selon l'une des revendications précédentes, **caractérisé en ce que** l'élément primaire (434.4, 434.5 ; 534.4, 534.5) et l'élément secondaire (434.1, 534.1) sont montés à rotation l'un par rapport à l'autre à l'aide d'un montage en palier (436, 437, 438 ; 536, 537, 538), et **en ce que** le montage en palier (436, 437, 438 ; 536, 537, 538), en cas de besoin, est susceptible d'être sollicité par un couple de friction pouvant être prédéterminé, au moyen d'un dispositif élastique (439, 440).

8. Dispositif d'embrayage de démarrage selon la revendication 7, **caractérisé en ce que** l'élément secondaire (434.1, 534.1) est relié de façon assujettie en rotation au moyeu d'entrée à la transmission (443, 543).

9. Dispositif d'embrayage de démarrage selon la revendication 8, **caractérisé en ce qu**'entre le moyeu d'entrée à la transmission (443, 543) et le moyeu d'embrayage (442, 542) est prévu un palier axial (445, 545).

10. Dispositif d'embrayage de démarrage selon l'une des revendications précédentes, **caractérisé en ce que,** côté entraînement, est prévu un disque (403, 503) flexible, par l'intermédiaire duquel le dispositif d'embrayage de démarrage (K5, K6) est susceptible d'être relié à un moteur (M), en particulier un moteur à combustion.

11. Dispositif d'embrayage de démarrage selon l'une des revendications précédentes, **caractérisé en ce qu**'un moteur électrique, par exemple un générateur-démarreur monté sur vilebrequin (166) est prévu, entourant côté périphérie l'embrayage à lamelles (L2) et/ou l'amortisseur de vibrations de torsion (T2).

12. Dispositif d'embrayage de démarrage selon la revendication 11, **caractérisé en ce que** le rotor (167) de la machine électrique ou du générateur-démarreur monté sur vilebrequin (166) forme le côté entraînement du dispositif d'embrayage de démarrage (K2).
